(19) **Europäisches Patentamt / European Patent Office / Office européen des brevets**

(11) **EP 4 518 504 A1**

(12) **EUROPEAN PATENT APPLICATION**
published in accordance with Art. 153(4) EPC

(43) Date of publication:
05.03.2025  Bulletin 2025/10

(21) Application number: 22939157.8

(22) Date of filing: 28.04.2022

(51) International Patent Classification (IPC):
**H04W 72/12** (2023.01)

(52) Cooperative Patent Classification (CPC):
**H04W 72/12**

(86) International application number:
**PCT/CN2022/090100**

(87) International publication number:
**WO 2023/206307 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: FUJITSU LIMITED
**Kawasaki-shi, Kanagawa 211-8588 (JP)**

(72) Inventors:
• JIANG, Qinyan
  **Beijing 100022 (CN)**
• ZHANG, Jian
  **Beijing 100022 (CN)**
• ZHANG, Lei
  **Beijing 100022 (CN)**

(74) Representative: **Haseltine Lake Kempner LLP
Cheapside House
138 Cheapside
London EC2V 6BJ (GB)**

(54) **DATA RECEPTION AND SENDING METHOD, DATA SENDING AND RECEPTION METHOD, AND APPARATUS**

(57)  Embodiments of this disclosure provide a data reception and transmission method, a data transmission and reception method and apparatuses thereof. The terminal equipment monitors a first PDCCH candidate for scheduling at least two cells in a first cell, the at least two cells including the first cell and/or at least one second cell; the terminal equipment receives PDSCHs on the at least two cells; and/or, the terminal equipment transmits PUSCHs on the at least two cells. Hence, the terminal equipment is able to determine the first PDCCH candidate, and schedules DCI of at least two cells, so as to support scheduling multiple serving cells by one DCI, thereby alleviating a burden of the terminal equipment in performing DCI monitoring, and lowering power consumption and complexity. Moreover, by further supporting scheduling PDSCHs and/or PUSCHs on multiple serving cells at a time on the basis of scheduling a cell by the DCI at a time, flexibility of scheduling may further be increased, and efficiency of data transmission may be improved.

the terminal equipment monitors a first PDCCH candidate for scheduling at least two cells in a first cell, the at least two cells including the first cell and/or at least one second cell — 401

the terminal equipment receives PDSCHs on the at least two cells — 402

the terminal equipment transmits PUSCHs on the at least two cells — 403

**Fig. 4**

EP 4 518 504 A1

**Description**

Technical Field

This disclosure relates to the field of communication technologies.

Background

A physical downlink shared channel (PDSCH) is one of physical downlink channels used in a wireless communication system to carry downlink data. A physical uplink shared channel (PUSCH) is one of physical uplink channels used in a wireless communication system to carry uplink data. The PDSCH and PUSCH may be scheduled by downlink control information (DCI). In an existing new radio (NR) system, multiple DCI formats for scheduling PDSCHs or PUSCHs are defined, and included specific information and/or sizes of DCI in different DCI formats are different, so as to meet different scheduling demands.

A concept of control resource set (CORESET) is introduced in NR. CORESET is time-frequency resources corresponding to monitoring occasions of PDCCHs, and a search space (SS) defines monitoring occasions and search behaviors in the monitoring occasions.

A serving cell may configure one or more bandwidth parts (BWPs) in both uplink and downlink. The CORESET and SS are configured in a downlink bandwidth part (DL BWP), but the configured CORESET and SS are indexed within per serving cell. A BWP may configure multiple CORESETs and SSs. Except for CORESET index # 0, the configuration of a CORESET includes an index of the CORESET. Except for SS index # 0, the configuration of an SS includes an index of the SS and an index of a CORESET to which the SS corresponds. A CORESET may be associated with multiple SSs, that is, configurations of different SSs may include identical CORESET indices. According to the above configurations, the terminal device may learn a combination of CORESETs and SSs, thereby determining configuration of the PDCCH.

In order to transmit a DCI, a network device needs to perform cyclic redundancy check (CRC) attachment, channel coding, rate matching, scrambling, modulation, etc., on a DCI payload of the DCI, and map it onto a physical resource to which a PDCCH candidate corresponds; and correspondingly, the terminal equipment monitors the PDCCH candidate, so as to receive the DCI.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

At present, radio resource control configures a carrier (cell) to perform self-scheduling or cross-carrier scheduling. Self-scheduling refers to scheduling a PDSCH and/or PUSCH on a carrier by DCI transmitted on the carrier; and cross-carrier scheduling refers to scheduling a PDSCH and/or PUSCH on a carrier (cell) by DCI transmitted on another carrier (cell). Currently, DCI only supports scheduling one serving cell (at a time), including situations where self-scheduling and cross-carrier scheduling are concerned. In order to alleviate a burden of a terminal equipment in monitoring DCI and lower power consumption and complexity, an NR system will support scheduling PDSCHs and/or PUSCHs of multiple serving cells by one DCI (that is, scheduling multiple cells by the DCI at a time).

However, there is currently no solution on how to support scheduling PDSCHs and/or PUSCHs of multiple serving cells by one DCI (such as how to configure and determine a PDCCH candidate used for transmitting/receiving the DCI, etc.).

In order to solve at least one of the above problems, embodiments of this disclosure provide a data reception and transmission method, a data transmission and reception method and apparatuses thereof. Hence, a terminal equipment is able to determine a first PDCCH candidate, and receives DCI scheduling at least two cells based on the first PDCCH candidate, so as to support scheduling multiple serving cells by one DCI, thereby alleviating a burden of the terminal equipment in performing DCI monitoring, and lowering power consumption and complexity. Moreover, by further supporting scheduling PDSCHs and/or PUSCHs on multiple serving cells at a time on the basis of scheduling one cell by the DCI at a time, flexibility of scheduling may further be increased, and efficiency of data transmission may be improved.

According to one aspect of the embodiments of this disclosure, there is provided a data reception and transmission apparatus, applicable to a terminal equipment, the apparatus including:

a monitoring unit configured to monitor a first PDCCH candidate for scheduling at least two cells in a first cell, the at least two cells including the first cell and/or at least one second cell;
a receiving unit configured to receive PDSCHs on the at least two cells; and/or,

a transmitting unit configured to transmit PUSCHs on the at least two cells.

According to another aspect of the embodiments of this disclosure, there is provided a data transmission and reception apparatus, applicable to a network device, apparatus including:

a first transmitting unit configured to transmit first DCI at a first PDCCH candidate of a first cell, the first PDCCH candidate being used for scheduling at least two cells, the at least two cells including the first cell and/or at least one second cell;
a second transmitting unit configured to transmit PDSCHs on the at least two cells; and/or,
a receiving unit configured to receive the PUSCHs on the at least two cells.

According to a further aspect of the embodiments of this disclosure, there is provided a data reception and transmission method, applicable to a terminal equipment, the method including:

monitoring a first PDCCH candidate for scheduling at least two cells by the terminal equipment in a first cell, the at least two cells including the first cell and/or at least one second cell;
receiving PDSCHs by the terminal equipment on the at least two cells; and/or,
transmitting PUSCHs by the terminal equipment on the at least two cells.

According to still another aspect of the embodiments of this disclosure, there is provided a data transmission and reception method, applicable to a network device, method including:

transmitting first DCI by the network device at a first PDCCH candidate of a first cell, the first PDCCH candidate being used for scheduling at least two cells, the at least two cells including the first cell and/or at least one second cell;
transmitting PDSCHs by the network device on the at least two cells; and/or,
receiving the PUSCHs by the network device in the at least two cells.

An advantage of the embodiments of this disclosure exists in that the terminal equipment is able to determine a first PDCCH candidate, and receives DCI scheduling at least two cells based on the first PDCCH candidate, so as to support scheduling multiple serving cells by one DCI, thereby alleviating a burden of the terminal equipment in performing DCI monitoring, and lowering power consumption and complexity. Moreover, by further supporting scheduling PDSCHs and/or PUSCHs on multiple serving cells at a time on the basis of scheduling a cell by the DCI at a time, flexibility of scheduling may further be increased, and efficiency of data transmission may be improved.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

FIG. 1 is schematic diagram of a communication system of embodiments of this disclosure;
FIG. 2A is a schematic diagram of a CORESET of embodiments of this disclosure;
FIG. 2B is a schematic diagram of a PDCCH monitoring occasion of embodiments of this disclosure;
FIG. 3 is a schematic diagram of CCE configuration of a serving cell of embodiments of this disclosure;
FIG. 4 is a schematic diagram of a data reception and transmission method of embodiments of this disclosure;
FIG. 5 is a schematic diagram of PDCCH candidate CCEs of a cell of embodiments of this disclosure;
FIGs. 6A-6B are other schematic diagrams of the PDCCH candidate CCE of a cell of the embodiments of this disclosure;

FIGs. 7A-7B are further schematic diagrams of the PDCCH candidate CCE of a cell of the embodiments of this disclosure;

FIGs. 8A-8C are schematic diagrams of a PDCCH candidate CCE of a cell group of embodiments of this disclosure;

FIGs. 9A-9B are other schematic diagrams of the PDCCH candidate CCE of a cell group of the embodiments of this disclosure;

FIGs. 10A-10B are further schematic diagrams of the PDCCH candidate CCE of a cell group of the embodiments of this disclosure;

FIGs. 11A-11C are schematic diagrams of a PDCCH candidate CCE of a reference cell of embodiments of this disclosure;

FIGs. 12A-12B are other schematic diagrams of the PDCCH candidate CCE of a reference cell of the embodiments of this disclosure;

FIGs. 13A-13B are further schematic diagrams of the PDCCH candidate CCE of a reference cell of the embodiments of this disclosure;

FIG. 14 is a schematic diagram of a PDCCH candidate CCE of a combination cell of embodiments of this disclosure;

FIG. 15 is a schematic diagram of a data transmission and reception method of embodiments of this disclosure;

FIG. 16 is a schematic diagram of a data reception and transmission apparatus of embodiments of this disclosure;

FIG. 17 is a schematic diagram of a data transmission and reception apparatus of embodiments of this disclosure;

FIG. 18 is a schematic diagram of a network device of embodiments of this disclosure; and

FIG. 19 is a schematic diagram of a terminal equipment of embodiments of this disclosure.

Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment, except otherwise specified.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable. The terms "cell", "carrier", "serving cell", "carrier component" and "serving carrier" are interchangeable. The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable. The terms "DCI" and "DCI format" are interchangeable.

In addition, transmitting or receiving a PUSCH may be understood as transmitting or receiving uplink data carried by the PUSCH, transmitting or receiving a PUCCH may be understood as transmitting or receiving uplink information (e.g. UCI) carried by the PUCCH, transmitting or receiving a PRACH may be understood as transmitting or receiving a preamble carried by the PRACH. Transmitting or receiving a PDSCH may be understood as transmitting or receiving downlink data carried by the PDSCH, and transmitting or receiving a PDCCH may be understood as transmitting or receiving downlink information (e.g. DCI) carried by the PDCCH.

In the embodiments of this disclosure, higher-layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

Scenarios in the embodiments of this disclosure shall be described below by way of examples; however, this disclosure is not limited thereto.

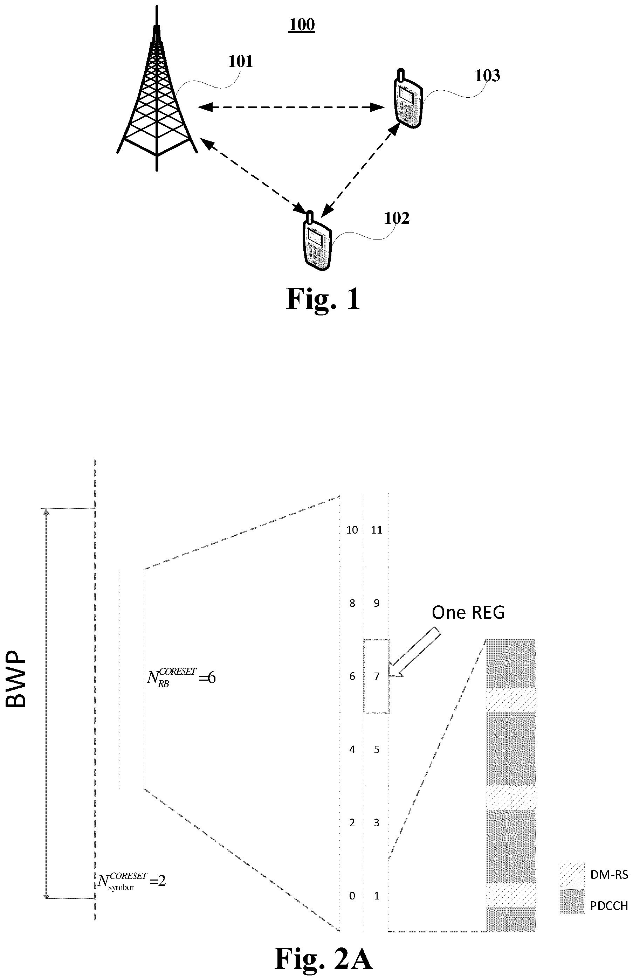

FIG. 1 is a schematic diagram of a communication system of embodiments of this disclosure, in which a case where terminal equipments and a network device are taken as examples is schematically shown. As shown in FIG. 1, the communication system 100 may include a network device 101 and terminal equipment 102, 103. For the sake of simplicity, an example having only two terminal equipment and one network device is schematically given in FIG. 1; however, the embodiments of this disclosure are not limited thereto.

In the embodiments of this disclosure, existing services or services that may be implemented in the future may be performed between the network device 101 and the terminal equipments 102, 103. For example, such services may include but not limited to an enhanced mobile broadband (eMBB), massive machine type communication (MTC), ultra-reliable and low-latency communication (URLLC), and related communications of reduced capability terminal equipments, etc.

It should be noted that FIG. 1 shows that two terminal equipments 102, 103 are both in coverage of the network device 101. However, this disclosure is not limited thereto, and the two terminal equipments 102, 103 may not be in coverage of the network device 101, or one terminal equipment 102 is in coverage of the network device 101 and the other terminal equipment 103 is out of coverage of the network device 101.

A PDCCH candidate is determined based on CORESET configuration and SS configuration.

The CORESET configuration, SS configuration and a method for determining a PDCCH candidate shall be exemplified below.

For the CORESET configuration

Configuration of a CORESET other than CORESET #0 may include at least the following information fields:

*controlResourceSetId,* which indicates a CORESET index;

*frequencyDomainResources,* which indicates resources of the CORESET in a frequency domain;

*duration,* which indicates a duration of the CORESET, such as continuous symbol data;

*cce-REG-MappingType,* which indicates a mode of mapping a CCE to an REG, such as interleaving mapping or non-interleaving mapping;

*precoderGranularity,* which indicates a mode of mapping a DMRS in a PDCCH, for example, when *"precoderGranularity"* indicates allContiguousRBs, a DMRS associated with a PDCCH to which it corresponds is broadband mapping, that is, the DMRS associated with the PDCCH occupies all REGs in the CORESET; otherwise, the DMRS associated with the PDCCH to which it corresponds is narrowband mapping, that is, the DMRS associated with the PDCCH only occupies REGs occupied by the PDCCH;

in addition, reference may be made to existing techniques for other relevant information fields in configurations of CORESETs other than CORESET #0, which are not limited in this disclosure.

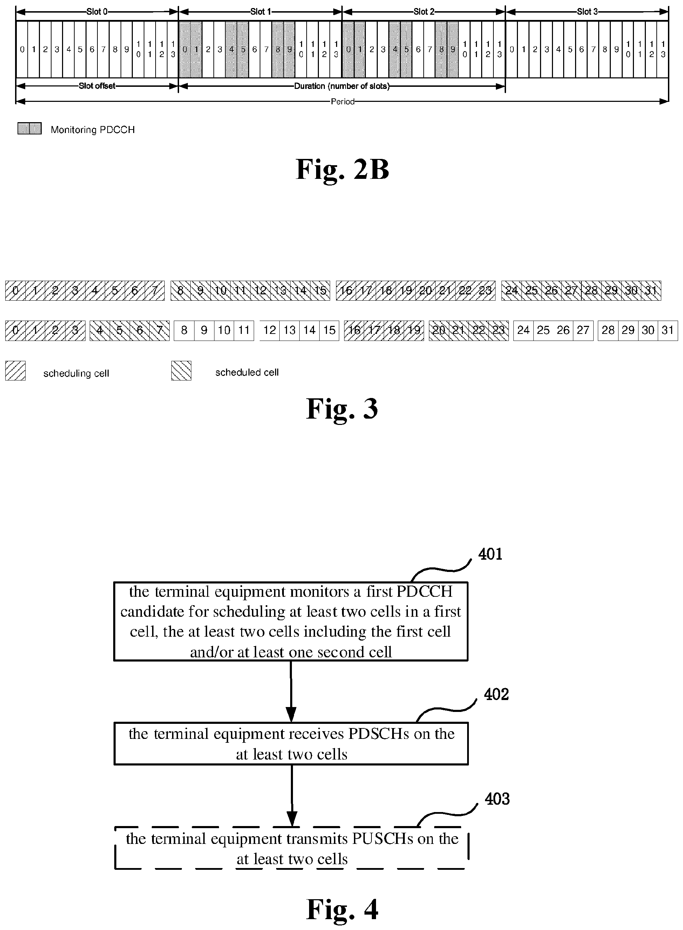

FIG. 2A is a schematic diagram of the CORESET of embodiments of this disclosure. A control channel element (CCE) for allocating PDCCH channel resources is a basic unit constituting the PDCCH. In NR, one CCE occupies 6 REGs, each corresponding to 12 resource elements (REs) on a physical resource block (RB), wherein one REG has 9 PDCCH data REs and 3 DRMS REs, hence, in REG0 and REG1 shown in FIG. 2, there are 18 PDCCH data REs and 6 DRMS REs respectively. In addition, mapping between the CCEs and REGs may be achieved in such modes as interleaving mapping and non-interleaving mapping, etc. Reference may be made to existing techniques for a particular manner of mapping, which is not limited in this disclosure.

In addition, the number of CCEs in the PDCCH is referred to as aggregation level (AL) or aggregation degree. In transmitting the PDCCH, according to an actual wireless channel environment, the network device 101 may determine how many aggregation levels are used to transmit control information. For example, when the wireless channel environment is harsh, using a large aggregation degree may achieve relatively good demodulation performance; and when the wireless channel environment is relatively good, a relatively smaller aggregation degree is used.

As shown in FIG. 2A, for example, relevant parameters in the CORESET configuration are $N_{\mathrm{RB}}^{\mathrm{CORESET}} = 6, N_{\mathrm{symb}}^{\mathrm{CORESET}} = 2$ , that is, one CORESET occupies 6 RBs in the frequency domain and 2 symbols in the time domain. For the current CORESET, there are total 2 CCEs. Assuming that AL = 2, a transmitted PDCCH includes 2 CCEs, and for CCE-to-REG mapping, the interleaving and non-interleaving mapping methods are identical.

For SS configuration

Configuration of SS other than SS #0 may include at least the following information fields:

*searchSpaceId,* which indicates an SS index;

*monitoringSlotPeriodicityAndOffset,* which indicates a PDCCH monitoring period (in units of slots) and a slot offset from the start of the monitoring period to an actual detection search space;

*controlResourceSetId,* which indicates a CORESET index to which the SS corresponds;

*duration,* which indicates the number of consecutive PDCCH monitoring slots in a PDCCH monitoring period, the PDCCH monitoring slot referring to a slot in which the PDCCH candidate needs to be monitored;

*monitoringSymbolsWithinSlot,* which indicates a starting symbol of a PDCCH monitoring occasion in a PDCCH monitoring slot, for example, there are total 14 bits, a highest bit therein denoting a first symbol, and so on;

*nrofCandidates,* which indicates the number of PDCCH candidates, such as indicating the number of corresponding PDCCH candidates for different ALs; and

*searchSpaceType,* which indicates a type of a search space, such as a common search space (CSS), or a UE-specific search space (USS).

FIG. 2B is a schematic diagram of the PDCCH monitoring occasion of the embodiments of this disclosure.

As shown in FIG. 2B, it is assumed that,

the CORESET to which *controlResourceSetId* corresponds includes 2 symbols.

Periodicity: 4 slots

*Duration:* 2 slots

*monitoringSymbolsWithinSlot:*10001000100000.

The terminal equipment is able to determine the PDCCH monitoring occasion.

In addition, reference may be made to existing techniques for relevant information fields other than SS #0 in the configuration of SS, which are not limited in this disclosure.

For search space configuration and CORESET configuration associated therewith, the terminal equipment may determine time-frequency domain resources where PDCCHs are monitored. In order to reduce complexity of blind detection of the PDCCHs by a UE, configuration information for configuring the number of PDCCH candidates is further provided in the search space configuration. Thus, when the UE blindly detects PDCCHs/DCI at one PDCCH monitoring occasion of a search space, it may determine that there are multiple corresponding PDCCH candidates for one or more aggregation levels and CCEs to which the PDCCH candidates correspond.

For example, for an active DL BWP of a subcarrier spacing $\mu$ of a serving cell $f$, a slot $n_{s,f}^{\mu}$ and a CCE index corresponding to a PDCCH candidate $m_{s,n_{CI}}$ of an aggregation level L in a search space (or search space set) s of an associated CORESET $p$ are provided by a formula as below:

$$L \cdot \left\{ \left( Y_{p,n_{s,f}^{\mu}} + \left\lfloor \frac{m_{s,n_{CI}} \cdot N_{\text{CCE},p}}{L \cdot M_{s,\text{max}}^{(L)}} \right\rfloor + n_{CI} \right) mod \left\lfloor N_{\text{CCE},p}/L \right\rfloor \right\} + i \qquad (1);$$

where, $i = \{0,1, ... , L - 1\}$, $Y_{p,n_{s,f}^{\mu}}$, denoting a frequency-domain starting position of the PDCCH candidate set, and reference may be made to existing techniques for specific parameters and contents thereof, which are not limited in this disclosure; $N_{\text{CCE},p}$ denotes the number of CCEs in CORESET $p$; $n_{CI}$ is a value of carrier indication, wherein for cross-carrier scheduling, a value of carrier indication of a scheduled cell/carrier is notified to the terminal equipment by high-level signaling, such as an IE *"CrossCarrierSchedulingConfig"* in the RRC signaling, the value of carrier indication of the scheduling cell/carrier is predefined as 0, and values of carrier indication to which different cells correspond, i.e. values $n_{CI}$ to which different carriers correspond, are different. Therefore, it may be ensured that PDCCH candidate sets of different carriers may occupy non-overlapped CCEs as much as possible, thereby avoiding PDCCH blocking caused by resource conflicts. If there exists no cross-carrier scheduling or for CSS, its value is 0; $m_{s,n_{CI}}^{(L)}$ is a PDCCH candidate index, $m_{s,n_{CI}}^{(L)} = 0, ... , M_{s,n_{CI}}^{(L)}$, where, $M_{s,n_{CI}}^{(L)}$ denotes the search space s, the aggregation level is L, corresponding to the number of PDCCH candidates of a serving cell of $n_{CI}$, where, s is an SS index; $M_{s,\text{max}}^{(L)}$ denotes the number of PDCCH candidates of the search space s with the aggregation level L; for CSS, $M_{s,\text{max}}^{(L)} = M_{s,0}^{(L)}$, and for USS, it is a maximum value of $M_{s,n_{CI}}^{(L)}$ within a range of all values of $n_{CI}$ with the aggregation level L in CORESET $p$ in the search space s.

Assuming that $Y_{p,n_{s,f}^{\mu}} = 0$ and $N_{\text{CCE},p} = 32$, for each serving cell (there are total two serving cells), the number of PDCCH candidates on each AL (it is assumed here that each serving cell is only configured with AL = 4, 8) is shown in Table 1. According to formula (1), the CCE indices corresponding to the PDCCH candidates to which each serving cell corresponds are shown in FIG. 3.

In the related art, one serving cell is able to schedule two serving cells, but is only able to schedule one serving cell in one DCI. For example, assuming that $Y_{p,n_{s,f}^{\mu}} = 0, N_{\text{CCE},p} = 32$, for each serving cell (there are total two serving cells), the number of PDCCH candidates on each AL is shown in Table 1. CCEs of PDCCH candidates to which each serving cell corresponds are shown in FIG. 3.

Table 1. Number of PDCCH candidates of each AL of each serving cell

| AL | Scheduling cell ($n_{CI}$ = 0) | Scheduled cell ($n_{CI}$ = 1) |
|----|----|----|
| 4 | 2 | 2 |
| 8 | 2 | 2 |

The above method is designed for scheduling only one cell by one DCI, in which a corresponding PDCCH candidate set may be configured and determined for each serving cell, and DCI for scheduling PDSCHs/PUSCHs of each serving cell may be transmitted/received at PDCCH candidates in a corresponding set.

In order to alleviate a burden of a terminal equipment in monitoring DCI and lower power consumption and complexity, an NR system will support scheduling PDSCHs and/or PUSCHs of multiple serving cells by one DCI. However, there is currently no method for configuring and determining a PDCCH candidate supporting scheduling PDSCHs and/or PUSCHs of multiple serving cells by one DCI.

Hence, in a case where a serving cell scheduling at least two serving cells simultaneously, how to determine PDCCH candidates of the at least two serving cells is a problem that needs to be solved.

Following description shall be given with reference to embodiments.

Embodiments of a first aspect

The embodiments of this disclosure provide a data reception and transmission method, which shall be describe from a terminal equipment side.

FIG. 4 is a schematic diagram of a data reception and transmission method of the embodiments of this disclosure. As shown in FIG. 4, the method includes:

401: a terminal equipment in a first cell monitors a first PDCCH candidate for scheduling at least two cells by the, the at least two cells including the first cell and/or at least one second cell;
402: the terminal equipment receives PDSCHs by on the at least two cells; and/or,
403: the terminal equipment transmits PUSCHs on the at least two cells.

Hence, the terminal equipment monitors the first PDCCH candidate for scheduling at least two cells in the first cell, the at least two cells including the first cell and/or at least one second cell, and receives the PDSCHs and/or transmits the PUSCHs on the at least two cells. Thus, the terminal equipment is able to determine the first PDCCH candidate, and based on the first PDCCH candidate, receives DCI scheduling at least two cells, so as to support scheduling multiple serving cells by one DCI, thereby alleviating a burden of the terminal equipment in monitoring the DCI and lowering power consumption and complexity. Moreover, by further supporting scheduling PDSCHs and/or PUSCHs on multiple serving cells at a time on the basis of scheduling a cell by the DCI at a time, flexibility of scheduling may further be increased, and efficiency of data transmission may be improved.

In some embodiments, the first PDCCH candidate is used to transmit first DCI, which is used to schedule two or more cells simultaneously. For example, the first DCI schedules the first cell and at least one second cell simultaneously, or the first DCI schedules at least two second cells simultaneously.

In some embodiments, the first DCI is only used for scheduling two or more cells simultaneously (i.e. at a time), or the first DCI may be used for scheduling two or more cells simultaneously (i.e. at a time) and may be used for scheduling only one cell at a time.

In some embodiments, the first DCI is DCI format 0_1/1_1, or DCI format 0_2/1_2, or may be other DCI formats; however, it is not limited thereto.

In some embodiments, the terminal equipment receives the first DCI in the first cell, and the first cell may schedule PDSCHs and/or PUSCHs on the second cell. The first cell may also be referred to as a scheduling cell, the second cell may also be referred to as a scheduled cell, or the first cell may schedule PDSCHs and/or PUSCHs of its own (self-scheduling); the first cell may be a primary cell or a secondary cell, for example, the first cell is a primary cell, and the at least one second cell includes a secondary cell; or, the first cell is a secondary cell, and the at least one second cell includes a primary cell and/or a secondary cell; however, the embodiments of this disclosure is not limited thereto.

In some embodiments, scheduling the first cell or the second cell by the first cell may also be referred to as scheduling PDSCHs and/or PUSCHs on the first cell or the second cell by the first cell, or scheduling PDSCHs and/or PUSCHs on the first cell or the second cell by the first DCI received on the first cell. Scheduling a cell by the first DCI may also be referred to as scheduling PDSCHs and/or PUSCHs on the cell by the first DCI. DCI used for scheduling PDSCHs may also be referred to as downlink (DL) assignment, and DCI used for scheduling PUSCHs may also be referred to as an uplink (UL) grant.

Receiving cell configuration information of the first cell and/or the at least one second cell by the terminal equipment shall be described below.

In some embodiments, the terminal equipment receives the cell configuration information of the first cell and/or at least one second cell, and different cells have corresponding cell configuration information. One cell configuration information includes or does not include first indication information for configuring a search space, and/or, the cell configuration information includes or does not include second indication information for configuring PDCCH candidates, and/or, the cell configuration information includes or does not include third indication information for configuring a search space identifier.

For example, the first indication information includes the above SS configuration, the second indication information includes the "nofcandidate" information in the above SS configuration, and the third indication information is the "searchSpaceId" in the above SS configuration. In some embodiments, cell configuration information of a second cell in the at least one second cell does not include the first indication information, or does not include the second indication information, or includes the third indication information and/or the second indication information. Here, only one second cell is taken as an example; however, this disclosure is not limited to only for one second cell.

For example, the configuration information of the second cell does not include the first indication information and the second indication information, but includes the third indication information, for example, the third indication information is used to indicate one or more search space indices. The indices correspond to search spaces configured as having identical indices in the first cell configuration information. The search spaces are used to schedule the second cell, and other search spaces are not used for scheduling the second cell. Search space indices indicated by the third indication information of the configuration information of different second cells are identical or different. Hence, different search spaces on the first cell may be respectively used to schedule different cells. Optionally, the above search spaces are all USSs. That is, it is supported that different USSs are respectively used to schedule different cells.

In some embodiments, in a case where the cell configuration information of the first cell and/or at least one second cell respectively includes the second indication information, PDCCH candidates configured for each cell are identical. For example, the number of PDCCH candidates for each AL indicated by the second indication information of the first cell and the second indication information of the second cell are respectively identical; however, the embodiments of this disclosure are not limited thereto. For example, the PDCCH candidates configured for each cell may also be different.

The PDCCH candidates shall be exemplified below.

In some embodiments, the terminal equipment determines a PDCCH candidate set included in a CORESET of (corresponding to) a first search space where the first PDCCH candidate is located.

In some embodiments, the first search space is a terminal-equipment-specific search space or a common search space.

For example, the CORESET corresponding to the first search space where the first PDCCH candidate is located may be determined based on a correspondence between the above search space and the CORESET. PDCCH candidates in the PDCCH candidate set may be used to schedule at least two cells and/or used to schedule one cell.

In some embodiments, every PDCCH candidate in the PDCCH candidate set included in the CORESET of (corresponding to) the first search space where the first PDCCH candidate is located is respectively used for scheduling the at least two cells, and the first PDCCH candidate is any one therein.

In some embodiments, the first PDCCH candidate is a PDCCH candidate in an intersection of PDCCH candidates to which the at least two cells respectively correspond. In some embodiments, the first PDCCH candidate is a PDCCH candidate to which one of the at least two cells correspond.

For example, the first DCI is transmitted on one of the PDCCH candidates (i.e. the first PDCCH candidate) in the PDCCH candidate set included in the CORESET of (corresponding to) the first search space where the first PDCCH candidate is located. A meaning of the first DCI is as described above. In some implementations, the PDCCH candidate set included in the CORESET of (corresponding to) the first search space where the first PDCCH candidate is located includes a first PDCCH candidate set and a second PDCCH candidate set, PDCCH candidates in the first PDCCH candidate set being used for scheduling the at least two cells, PDCCH candidates in the second PDCCH candidate set being used for scheduling at least one cell, and the at least one cell and the at least two cells including or not including the same cell. The first PDCCH candidate is any one in the first PDCCH candidate set.

In some implementations, the first PDCCH candidate set and the second PDCCH candidate set include or do not include PDCCH candidates with identical CCEs. That is, overlap of the first PDCCH candidate set and the second PDCCH candidate set exists or does not exist.

In some implementations, a CCE of a PDCCH candidate of the first PDCCH candidate set is not a CCE of any PDCCH candidate of the second PDCCH candidate set. That is, the first PDCCH candidate set and the second PDCCH candidate set do not completely overlap.

In some implementations, the second PDCCH candidate is used to transmit the first DCI or the second DCI. A meaning of the first DCI is as described above. The second DCI is only used for scheduling one cell, that is, the second DCI schedules only one cell (at a time).

In some embodiments, the second DCI is DCI format 0_1/1_0, or DCI format 0_1/1_1, or DCI format 0_2/1_2, or other DCI format; however, it is not limited thereto.

In some embodiments, the DCI formats of the first DCI and the second DCI may be identical or different. For example, assuming that both the first DCI and the second DCI are DCI format 0_1/1_1, the DCI format may be used to schedule two or more cells simultaneously (i.e. at a time), or may be used to schedule only one cell (at a time). When the DCI format is used to schedule at least two cells simultaneously, corresponding DCI (deemed as the first DCI) is transmitted at the above first PDCCH candidate, and when the DCI format is used to schedule only one cell, corresponding DCI (deemed as the second DCI) is transmitted at the above second PDCCH candidate.

In some embodiments, the determining the PDCCH candidate set included in the CORESET of (corresponding to) the first search space includes: determining the PDCCH candidate set based on a first parameter and/or a second parameter, or, in other words, the CCEs of the PDCCH candidates in the PDCCH candidate set included in the CORESET of (corresponding to) the first search space are related to the first parameter and/or the second parameter. The determining the PDCC candidate set includes determining a CCE of the first PDCCH candidate by the terminal equipment.

Configuration of the first parameter and/or second parameter shall be described below.

In some embodiments, a value/values related to the first parameter and/or the second parameter is/are determined according to a predefined or preconfigured value of carrier indication or a value of a relevant parameter indicating the scheduled cell, or is/are predefined or preconfigured.

Taking the first parameter as an example, for example, the first parameter is $n_{CI}$, in some implementations, a value of $n_{CI}$ is predefined or is directly configured (indicated) by first configuration information, such as newly adding a field in the first configuration information to directly indicate the value of $n_{CI}$, or the value of $n_{CI}$ may be implicitly indicated based on first information or second information indicated in the first configuration information. For example, the first information may include a carrier indication field, the second information may include a valid value used for indicating that one or more cells may be scheduled, and the value of $n_{CI}$ may be determined according to a value of the first information and/or the valid value, for example, the value of $n_{CI}$ is equal to the value of the first information or the valid value. For example, the first configuration information is carried by RRC signaling, including cell configuration information or cross-carrier scheduling configuration information *CrossCarrierSchedulingConfig.*

In addition, the second parameter shall be described in detail below, and a method for determining the second parameter may be similar to that for determining the first parameter, or may be identical thereto or different therefrom, and this disclosure is not limited thereto.

In some embodiments, for a cell, a reference cell and a cell group, the PDCCH candidates may be obtained based on the first parameter and formula (1); in some embodiments, different cells correspond to different first parameters; and in some embodiments, different cell groups correspond to different first parameters, or, in other words, different cells (such as cells in the same cell group) may correspond to identical first parameters, for example, the first parameter is $n_{CI}$. A specific process for determining the PDCCH candidates and meanings of the reference cell and cell group shall be described in detail below.

In some implementations, for a cell, a reference cell and a cell group, the PDCCH candidates may be obtained based on the first parameter, the second parameter and formula (2) below:

$$L \cdot \left\{ \left( Y_{p,n_{s,f}^{\mu}} + \left\lceil \frac{m_{s,n_{CI}} \cdot N_{\text{CCE},p}}{L \cdot M_{s,\max}^{(L)}} \right\rceil + n_{CI} + n'_{CI} \right) mod \left\lfloor N_{\text{CCE},p}/L \right\rfloor \right\} + i \qquad (2);$$

where, the first parameter is $n_{CI}$, the second parameter is $n'_{CI}$, and methods for obtaining the first parameter and second parameter are as described above in this disclosure.

In some implementations, the first parameter corresponds to a reference cell, and the second parameter corresponds to at least one cell associated with the reference cell. For example, $n_{CI}$ corresponds to a reference cell, and $n'_{CI}$ corresponds to one or more cells associated with a reference cell to which $n_{CI}$ corresponds. For example, if a reference cell does not have an associated serving cell, $n'_{CI} = 0$.

In some implementations, the first parameter corresponds to a cell group index, the second parameter corresponds to at least one cell within the cell group, or vice versa. For example, $n_{CI}$ corresponds to an index of a cell group, and $n'_{CI}$ corresponds to one or more cells with the cell group.

In some implementations, the first parameter corresponds to a serving cell, and the second parameter corresponds to one or more other serving cells. For example, $n_{CI}$ corresponds to one serving cell, and $n'_{CI}$ corresponds to multiple serving cells. For example, in determining a PDCCH candidate used for scheduling the one serving cell, $n'_{CI} = 0$, and in determining a PDCCH candidates used for scheduling the multiple serving cells, $n_{CI} = 0$.

In some implementations, the first parameter corresponds to the case where one serving cell is scheduled, and the second parameter corresponds to the case where multiple serving cells are scheduled. For example, in a case where scheduling multiple serving cells is not configured, $n'_{CI} = 0$, and in a case where scheduling multiple serving cells is configured, $n_{CI} = 0$.

In some implementations, in a case where scheduling multiple serving cells is not configured, the PDCCH candidates are determined according to the first parameter and formula (1); and in a case where scheduling multiple serving cells is configured, the PDCCH candidates are determined according to the second parameter and formula (3):

$$L \cdot \left\{ \left( Y_{p,n_{s,f}^{\mu}} + \left\lceil \frac{m_{s,n_{CI}} \cdot N_{\text{CCE},p}}{L \cdot M_{s,\max}^{(L)}} \right\rceil + n'_{CI} \right) mod \left\lfloor N_{\text{CCE},p}/L \right\rfloor \right\} + i \qquad (3);$$

where, the second parameter is $n'_{CI}$.

Methods for determining the first PDCCH candidate and the second PDCCH candidate shall be described below by way of examples.

For example, the first cell is able to schedule four cells simultaneously, such as scheduling cells 0 to 3 simultaneously. However, the first cell may not actually schedule four cells in transmitting the first DCI. In other words, the first cell above is able to schedule four cells, but in transmitting specific first DCI, the number of scheduled cells may not be four; optionally, the first cell may schedule only one serving cell, such as transmitting the first DCI or the second DCI, or, it may also schedule multiple serving cells, such as transmitting the first DCI.

Determining the first PDCCH candidate and the second PDCCH candidate of the cell shall be described below.

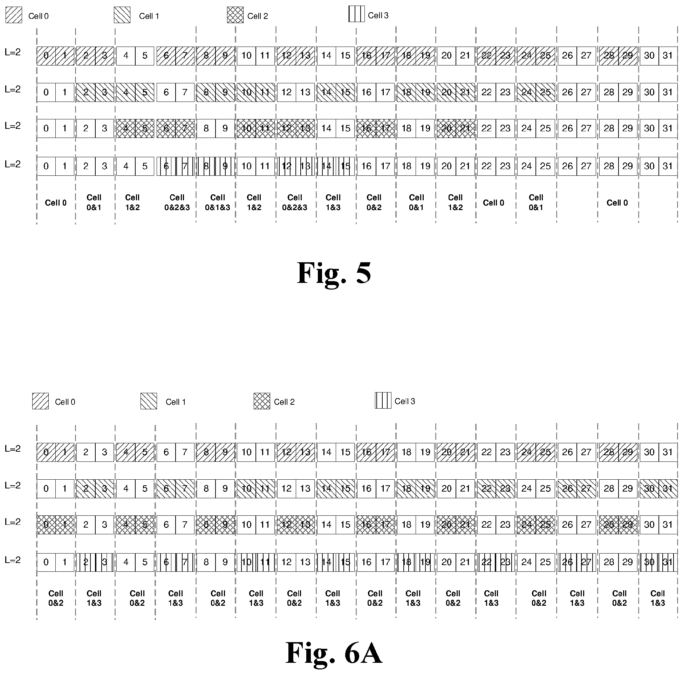

FIG. 5 is a schematic diagram of PDCCH candidate CCEs of the cell of the embodiments of this disclosure.

Taking four serving cells as an example, the number of PDCCH candidates configured for each AL of each serving cell is shown in Table 2:

Table 2: Number of PDCCH candidates of each AL of each serving cells

| AL | cell 0 | cell 1 | cell 2 | cell 3 |
|---|---|---|---|---|
| 1 | 0 | 0 | 0 | 0 |
| 2 | 10 | 8 | 6 | 4 |
| 4 | 0 | 0 | 0 | 0 |
| 8 | 0 | 0 | 0 | 0 |
| 16 | 0 | 0 | 0 | 0 |

In some implementations, the first PDCCH candidate and/or the second PDCCH candidate is/are determined based on PDCCH candidates under different ALs of each serving cell.

Taking that AL = 2 as an example, PDCCH candidate CCEs of the serving cells are as shown in FIG. 5, wherein PDCCH candidates of cell 0-cell 4 are as shown in FIG. 5, and a PDCCH candidate of an intersection of PDCCH candidates to which cell 0-cell 4 correspond is taken as the first PDCCH candidate. For example, a PDCCH candidate composed of CCE 2-CCE 3 is a PDCCH candidate that may simultaneously schedule cell 0 & cell 1. Therefore, the PDCCH candidate composed of CCE2-CCE 3 may be referred to as the first PDCCH candidate. In addition, methods for determining other first PDCCH candidate shall not be enumerated herein any further.

In some implementations, PDCCH candidates to which each cell correspond that have no intersection are taken as second PDCCH candidates. For example, a PDCCH candidate composed of CCE 0-CCE 1 is a PDCCH candidate scheduling only cell 0, that is, it is a second PDCCH candidate.

In some implementations, a set composed of the first PDCCH candidates is a first PDCCH candidate set, and a set composed of the second PDCCH candidates is a second PDCCH candidate set.

In some implementations, as shown in FIG. 5, the first PDCCH candidate set and the second PDCCH candidate set do not include PDCCH candidates with identical CCEs, that is, a CCE of a candidate in the first PDCCH candidate set is not a CCE of any PDCCH candidate in the second PDCCH candidate set.

FIGs. 6A-6B are other schematic diagrams of the PDCCH candidate CCEs of the cell of the embodiments of this disclosure.

Still taking four serving cells as an example, the number of PDCCH candidates configured for each AL of each serving cell is shown in Table 3:

Table 3: Number of PDCCH candidates of each AL of each serving cells

| AL | cell 0 | cell 1 | cell 2 | cell 3 |
|---|---|---|---|---|
| 1 | 0 | 0 | 0 | 0 |
| 2 | 8 | 8 | 8 | 8 |
| 4 | 0 | 0 | 0 | 0 |
| 8 | 0 | 0 | 0 | 0 |
| 16 | 0 | 0 | 0 | 0 |

In some implementations, the first PDCCH candidate and/or the second PDCCH candidate is/are determined based on PDCCH candidates under different ALs of each serving cell.

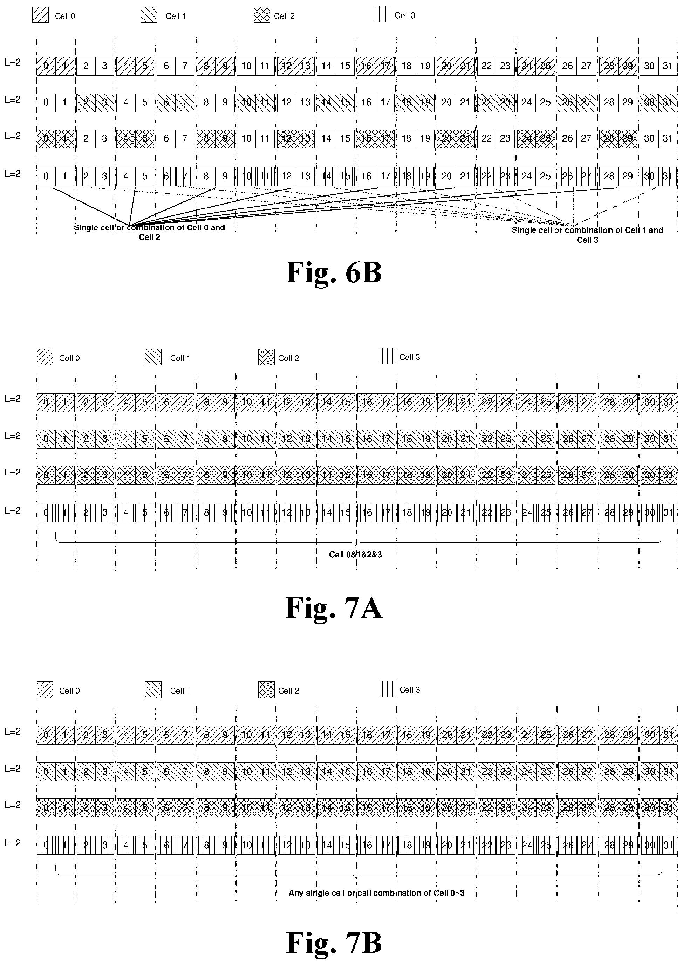

Taking that AL = 2 as an example, the PDCCH candidate CCEs of the serving cells are shown in FIGs. 6A and 6B.

In some implementations, as shown in FIG. 6A, PDCCH candidates of cell 0-cell 4 are shown in FIG. 6A, and a PDCCH candidate of an intersection of PDCCH candidates to which cell 0-cell 4 correspond is taken as the first PDCCH candidate. For example, a PDCCH candidate composed of CCE 0-CCE 1 is a PDCCH candidate of cell 0 & cell 2, and may be taken as a PDCCH candidate simultaneously scheduling cell 0 & cell 2. Likewise, a PDCCH candidate composed of CCE 2-CCE 3 is a PDCCH candidate simultaneously scheduling cell 1 & cell 3, and so on.

Optionally, the PDCCH candidate simultaneously scheduling cell 0 & cell 2 may be taken as the first PDCCH candidate, and the PDCCH candidate simultaneously scheduling cell 1 & cell 3 may be taken as the second PDCCH candidate; and furthermore, the first PDCCH candidate set and the second PDCCH candidate set do not include PDCCH candidates with identical CCEs, that is, a CCE of a PDCCH candidate in the first PDCCH candidate set is not a CCE of any PDCCH candidate in the second PDCCH candidate set.

Optionally, in some implementations, as shown in FIG. 6B, PDCCH candidates of cell 0-cell 4 are as shown in FIG. 6B, and a PDCCH candidate of an intersection of PDCCH candidates to which cell 0-cell 4 correspond is taken as the first PDCCH candidate. For example, for a PDCCH candidate composed of CCE 0-CCE 1, it may be taken as a PDCCH candidate scheduling single cell 0 (single cell), or scheduling single cell 2 (single cell), or simultaneously scheduling cell 0 & cell 2. For example, the PDCCH candidate simultaneously scheduling cell 0 & cell 2 may still be taken as the first PDCCH candidate, and the PDCCH candidate simultaneously scheduling cell 1 & cell 3 may still be taken as the second PDCCH candidate.

FIGs. 7A-7B are further schematic diagrams of the PDCCH candidate CCEs of the cell of the embodiments of this disclosure.

Still taking four serving cells as an example, the number of PDCCH candidates configured for each AL of each serving cell is shown in Table 4:

Table 4: Number of PDCCH candidates of each AL of each serving cells

| AL | cell 0 | cell 1 | cell 2 | cell 3 |
|----|--------|--------|--------|--------|
| 1 | 0 | 0 | 0 | 0 |
| 2 | 16 | 16 | 16 | 16 |
| 4 | 0 | 0 | 0 | 0 |
| 8 | 0 | 0 | 0 | 0 |
| 16 | 0 | 0 | 0 | 0 |

Contents identical to those in the above implementation shall not be repeated herein any further.

In some implementations, the first PDCCH candidate and/or the second PDCCH candidate is/are determined based on PDCCH candidates under different ALs of each serving cell.

Taking that AL = 2 as an example, PDCCH candidate CCEs of each serving cell are as shown in FIGs. 7A-7B.

In some implementations, as shown in FIG. 7A, PDCCH candidates in the PDCCH candidate set included in the CORESET of (corresponding to) the first search space where the first PDCCH candidate is located are respectively used to schedule at least two cells. A PDCCH candidate in an intersection of PDCCH candidates to which cell 0-cell 4 correspond is taken as the first PDCCH candidate. For example, PDCCH candidates of cell 0-cell 3 are identical, for example, a PDCCH candidate composed of CCE 0-CCE 1 is a PDCCH candidate of cell 0-cell 3. Furthermore, as shown in FIG. 7A, a PDCCH candidate composed of CCE 0-CCE 1 is a PDCCH candidate simultaneously scheduling cell 0 & cell 1 & cell 2 & cell 3, that is, it is the first PDCCH candidate.

Optionally, in some implementations, as shown in FIG. 7B, a PDCCH candidate may be taken as a PDCCH candidate single scheduling a serving cell and a PDCCH candidate simultaneously scheduling multiple serving cells. For example, for the PDCCH candidate composed of CCE0-CCE1, it may be taken as a PDCCH candidate single scheduling cell 0 (single cell), cell 1 (single cell), cell 2 (single cell), cell 3 (single cell), or simultaneously scheduling cell 0 & cell 1 & cell 2 & cell 3).

Thus, the terminal equipment may determine the first PDCCH candidate and/or the second PDCCH candidate of the serving cell.

In some implementations,

cells belonging to the same cell group or PUCCH group are in the same cell group;
all cells scheduled by the same scheduling cell are in the same cell group;
cells that may be scheduled by the same DCI/PDCCH are in the same cell group;
cells that may be scheduled by the same DCI/PDCCH are in the same cell group;
cells predefined and/or configured with index values of identical cell groups are in the same cell group;
cells predefined and/or configured with identical CIF values are in the same cell group; and

cells with corresponding PDCCH candidates that are overlapped are in the same cell group.

For example, in the case where the first cell is able to schedule four cells simultaneously, such as scheduling cell 0 to cell 3 simultaneously, for example, when no grouping is performed, cell 0-cell 3 belong to the same cell group or the same PUCCH group, cell 0-cell 3 may be deemed as a group, that is, no additional grouping is needed; optionally, cell 0-cell 3 may further be divided into cell groups. For example, if cell 0 and cell 1 are predefined and/or configured with an index value 0 of identical cell groups, and cell 2 and cell 3 are predefined and/or configured with an index value 1 of identical cell groups, cell 0 and cell 1 belong to group 0, and cell 2 and cell 3 belong to group 1. In addition, methods for dividing other cell groups shall not be enumerated herein any further.

In some implementations, the first cell may not necessarily schedule four cells in transmitting the first DCI. In other words, the above first cell is able to schedule four cells, but for transmitting specific first DCI, the number of scheduled cells may not be four; optionally, the first cell may schedule only one serving cell, such as transmitting the second DCI; and it may also schedule multiple serving cells, such as transmitting the first DCI, and when the first cell schedules multiple serving cells, it may schedule multiple serving cells in the same cell group simultaneously, or may schedule multiple serving cells between different cell groups.

When the first cell transmits specific first DCI, a combination of cells that may be scheduled by it is referred to as a combination cell. For example, when cells scheduled by the first DCI at a specific time are cell 0, cell 1 and cell 2, the combination cell is a combination of cell 0~cell 2; when cells scheduled by the first DCI at a specific time are cell 0 and cell 1, the combination cell is a combination of cell 0~cell 1; and when the first cell transmits specific first DCI or second DCI, it may only schedule a single cell, referred to as a single cell. For example, if cell 0 is scheduled by the second DCI at a specific time, it may be referred to as a single cell.

Determining the first PDCCH candidate and the second PDCCH candidate of the cell group shall be described below.

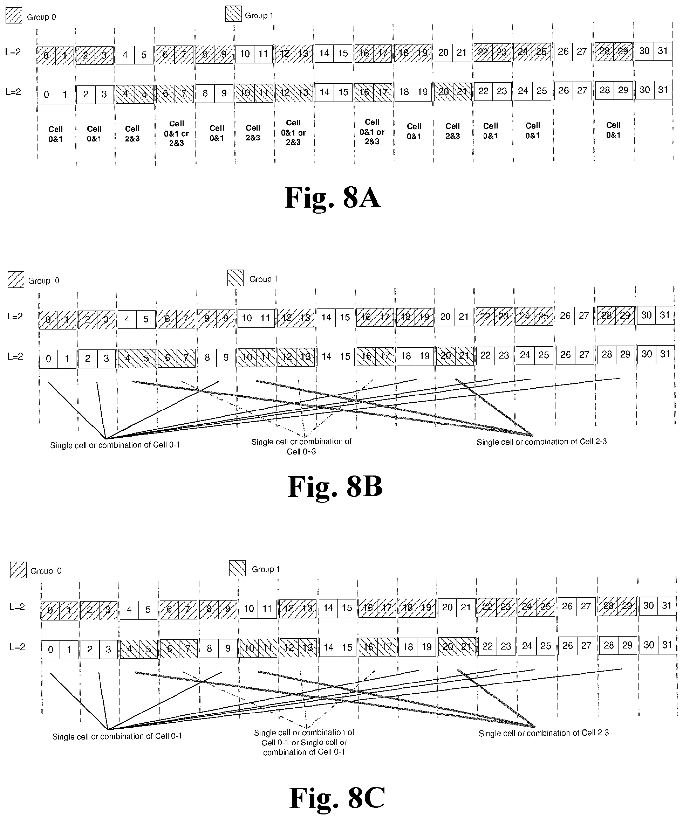

FIGs. 8A-8C are schematic diagrams of a PDCCH candidate CCE of a cell group of the embodiments of this disclosure.

Taking configuration in Table 5 as an example, wherein,

Table 5: Number of PDCCH candidates of each AL of each serving cell

| AL | group 0(cell 0, cell 1) | group 1(cell 2, cell 3) |
|---|---|---|
| 1 | 0 | 0 |
| 2 | 10 | 6 |
| 4 | 0 | 0 |
| 8 | 0 | 0 |
| 16 | 0 | 0 |

In some implementations, the first PDCCH candidate and/or the second PDCCH candidate are determined based on PDCCH candidates under different ALs of each cell group.

Taking that AL = 2 as an example, PDCCH candidate CCEs of each cell group are as shown in FIGs. 8A-8C.

In some implementations, as shown in FIG. 8A, a PDCCH candidate to which group 0 corresponds may be taken as the first PDCCH candidate, and a PDCCH candidate to which group 1 corresponds may be taken as the second PDCCH candidate. For example, cell 0 & cell 1 are scheduled simultaneously by the first PDCCH candidate, and cell 2 & cell 3 are scheduled simultaneously by the second PDCCH candidate; in addition, the first PDCCH candidate set and the second PDCCH candidate set may include PDCCH candidates with identical CCEs, such as PDCCH candidates composed of CCE 6-CCE 8. That is, the first PDCCH candidate set and the second PDCCH candidate set include PDCCH candidates with identical CCEs.

In some implementations, as shown in FIG. 8B, one PDCCH candidate may be taken as a PDCCH candidate single scheduling a serving cell and a PDCCH candidate simultaneously scheduling multiple serving cells, and different serving cells may be cross-group scheduled. For example, for a PDCCH candidate of CCE 0-CCE 1 to which PDCCH candidates correspond, it may be taken as a PDCCH candidate scheduling single cell 0 (single cell), or scheduling single cell 1 (single cell), or simultaneously scheduling cell 0 & cell 1; and a PDCCH candidate of CCE 6-CCE 7 to which PDCCH candidates correspond, it may be taken as a PDCCH candidate scheduling single cell 0 (single cell), or scheduling single cell 1 (single cell), or scheduling single cell 2 (single cell), or scheduling single cell 3 (single cell), or simultaneously scheduling cell 0 & cell 1 & cell 2 & cell 3. In addition, it may be deemed that an overlapped PDCCH candidate of group 0 and group 1, such as a PDCCH candidate of CCE 6-CCE 7 to which PDCCH candidates correspond, is the first PDCCH candidate, and a non-overlapped PDCCH candidate of group 0 and group 1, such as a PDCCH candidate of CCE 28-CCE 29 to which PDCCH candidates correspond, is the second PDCCH candidate, and vice versa.

In some implementations, as shown in FIG. 8C, a PDCCH candidate may be taken as a PDCCH candidate single scheduling one serving cell and a PDCCH candidate simultaneously scheduling multiple serving cells, and may not cross-group schedule different serving cells. For example, for a PDCCH candidate of CCE 6-CCE 7 to which PDCCH candidates correspond, it may be taken as a PDCCH candidate scheduling single cell 0 (single cell), or scheduling single cell 1 (single cell), or scheduling single cell 2 (single cell), or scheduling single cell 3 (single cell), or simultaneously scheduling cell 0 & cell 1, or simultaneously scheduling cell 2 & cell 3. In addition, parts identical to those in FIG. 8B shall not be repeated herein any further.

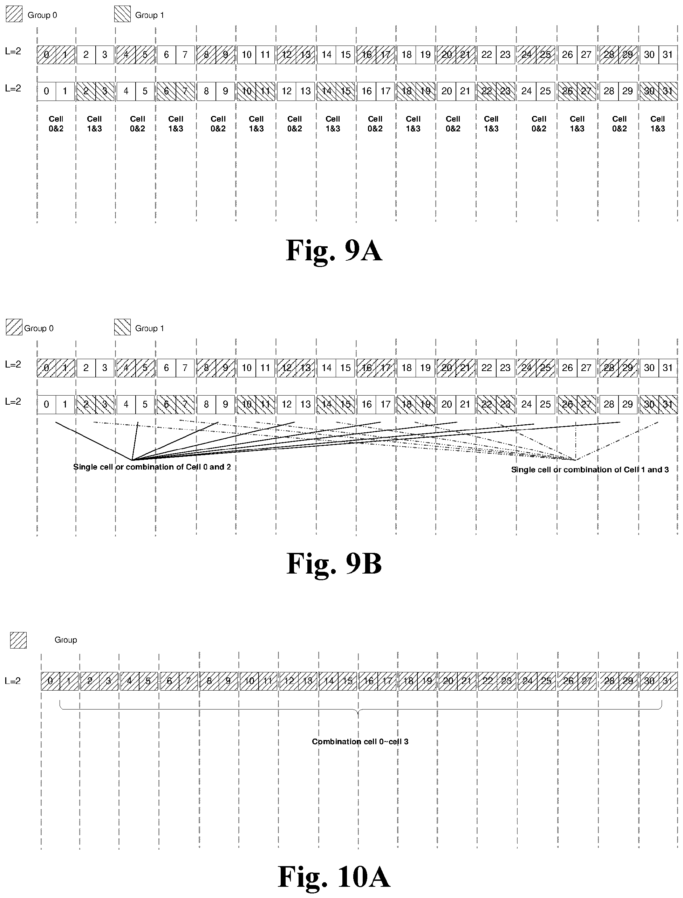

FIGs. 9A-9B are other schematic diagrams of the PDCCH candidate CCE of the cell group of the embodiments of this disclosure.

For example, cell 0 and cell 2 belong to cell group 0, and an index value of the cell group is 0; and cell 1 and cell 3 belong to cell group 1, and an index value of the cell group is 1. Parts identical to those in the above implementation shall not be repeated herein any further.

Taking configuration in Table 6 as an example, wherein,

Table 6: Number of PDCCH candidates of each AL of each cell group

| AL | group 0(cell 0, cell 2) | group 1(cell 1, cell 3) |
|---|---|---|
| 1 | 0 | 0 |
| 2 | 8 | 8 |
| 4 | 0 | 0 |
| 8 | 0 | 0 |
| 16 | 0 | 0 |

In some implementations, the first PDCCH candidate and/or the second PDCCH candidate are determined based on PDCCH candidates under different ALs of each cell group.

Taking that AL = 2 as an example, PDCCH candidate CCEs of the cell groups are shown in FIGs. 9A-9B.

In some implementations, as shown in FIG. 9A, a PDCCH candidate to which group 0 corresponds may be taken as the first PDCCH candidate, and a PDCCH candidate to group 1 corresponds may be taken as the second PDCCH candidate. There exists no overlapped PDCCH candidates between group 0 and group 1, hence, simultaneous scheduling cells across in group 0 and group 1 cannot be performed, such as simultaneously scheduling cell 0 & Cell2 by the first PDCCH candidate, and cell 1 & Cell3 are simultaneously scheduled by the second PDCCH candidate. In addition, the first PDCCH candidate set and the second PDCCH candidate set do not include PDCCH candidates with identical CCEs, that is, the first PDCCH candidate set and the second PDCCH candidate set do not include PDCCH candidates with identical CCEs.

In some implementations, as shown in FIG. 9B, a PDCCH candidate to which group 0 corresponds may be taken as the first PDCCH candidate, and a PDCCH candidate to which group 1 corresponds may be taken as the second PDCCH candidate. Moreover, a PDCCH candidate may be taken as a PDCCH candidate single scheduling a serving cell and a PDCCH candidate simultaneously scheduling multiple serving cells. For example, for a PDCCH candidate to which CCE 0-CCE 1 correspond, it may be taken as a PDCCH candidate scheduling single cell 0 (single cell), or scheduling single cell 2 (single cell), or simultaneously scheduling cell 0 & Cell2.

FIGs. 10A-10B are further schematic diagrams of the PDCCH candidate CCE of the cell group of the embodiments of this disclosure.

Still taking four serving cells as an example, the number of PDCCH candidates configured for each AL of each serving cell is shown in Table 7:

Table 7: Number of PDCCH candidates of each AL in the cell group

| AL | Group (cell 0, cell 1, cell 2, cell 3) |
|---|---|
| 1 | 0 |
| 2 | 16 |
| 4 | 0 |
| 8 | 0 |
| 16 | 0 |

In some implementations, the first PDCCH candidate and/or the second PDCCH candidate is/are determined based on PDCCH candidates under different ALs of each cell group.

Cells 0-cell 3 belong to the same group. Taking that AL = 2 as an example, the PDCCH candidate CCEs of the cell groups are shown in FIG. 10A-10B.

In some implementations, as shown in FIG. 10A, each PDCCH candidate in the PDCCH candidate set included in the CORESET of (corresponding to) the first search space where the first PDCCH candidate is located is respectively used to schedule at least two cells. For example, a PDCCH candidate in an intersection of PDCCH candidates to which the group (cell 0-Cell4) corresponds is taken as the first PDCCH candidate, for example, a PDCCH candidate composed of CCE 0-CCE1 is a PDCCH candidate of the group (cell 0-Cell4). Furthermore, as shown in FIG. 10A, a PDCCH candidate composed of CCE 0-CCE1 is a PDCCH candidate simultaneously scheduling cell 0-Cell4 (cell 0 & cell 1 & cell 2 & cell 3), i.e. the first PDCCH candidate.

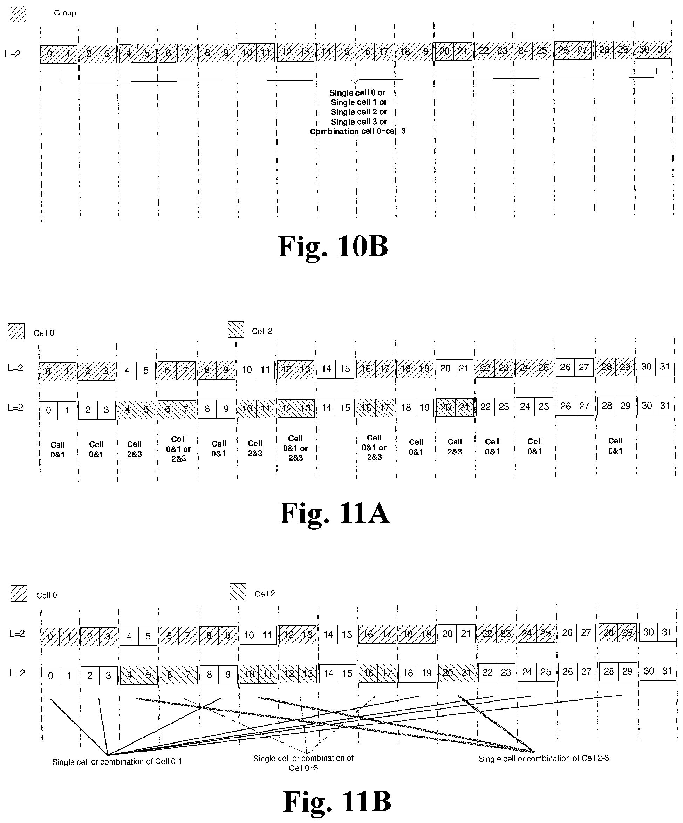

Optionally, in some implementations, as shown in FIG. 10B, a PDCCH candidate may be taken as a PDCCH candidate single scheduling a serving cell and a PDCCH candidate simultaneously scheduling multiple serving cells. For example, for a PDCCH candidate composed of CCE 0-CCE 1, it may be taken as a PDCCH candidate scheduling single cell 0 (single cell), or scheduling single cell 1 (single cell), or scheduling single cell 2 (single cell), or scheduling single cell 3 (single cell), or simultaneously scheduling cell 0 & cell 1 & cell 2 & cell 3.

Thus, the terminal equipment is able to determine the first PDCCH candidate and/or the second PDCCH candidate of the cell group.

In some implementations, a PDCCH candidate to which a third cell in at least two cells corresponds is taken as the first PDCCH candidate. For example, the third cell may also be referred to as a reference cell, and other cells are referred to as associated cells.

In some implementations, the reference cell is predefined and/or preconfigured with a corresponding first parameter.

In some implementations, if a cell may only be scheduled based on an association between it and other serving cells, the cell is not taken as a reference cell.

In some implementations, multiple cells that are able to be scheduled simultaneously may include only one reference cell, or may include multiple reference cells.

Determining the first PDCCH candidate and the second PDCCH candidate of the reference cell shall be exemplified below.

FIGs. 11A-11C are schematic diagrams of a PDCCH candidate CCE of the reference cell of the embodiments of this disclosure.

For example, based on a predefined or configured mode, cell 1 is associated with cell 0, and cell 0 is a reference cell of cell 1, or it may also be referred to as reference cell 0; likewise, cell 2 is associated with cell 3, and cell 2 is a reference cell of cell 3, or it may also be referred to as reference cell 1. Parts identical to those in the above implementations shall not be repeated herein any further.

Configuration in Table 8 is taken as an example, wherein,

Table 8: Number of PDCCH candidates of each AL of each reference cell

| AL | Cell 0 (reference cell of Cell 1) | Cell 1 | Cell 2 (reference cell of Cell 4) | Cell 3 |
|----|-----------------------------------|--------|-----------------------------------|--------|
| 1  | 0                                 | -      | 0                                 | -      |
| 2  | 10                                | -      | 6                                 | -      |
| 4  | 0                                 | -      | 0                                 | -      |
| 8  | 0                                 | -      | 0                                 | -      |
| 16 | 0                                 | -      | 0                                 | -      |

In some implementations, the first PDCCH candidate and/or the second PDCCH candidate is/are determined based on PDCCH candidates under different ALs of each reference cell.

Taking that AL = 2 as an example, PDCCH candidate CCEs of the reference cells are as shown in FIGs. 11A-11C.

In some implementations, as shown in FIG. 11A, a PDCCH candidate to which cell 0 (reference cell of cell 2) corresponds may be taken as the first PDCCH candidate, and a PDCCH candidate to which cell 1 (reference cell of cell 3) corresponds may be taken as the second PDCCH candidate. For example, cell 0 & cell 1 are scheduled simultaneously by the first PDCCH candidate, and cell 2 & cell 3 are scheduled simultaneously by the second PDCCH candidate; in addition, the first PDCCH candidate set and the second PDCCH candidate set may include PDCCH candidates with identical CCEs, such as PDCCH candidates composed of CCE 6-CCE 8. That is, the first PDCCH candidate set and the second PDCCH candidate set include PDCCH candidates with identical CCEs.

In some implementations, as shown in FIG. 11B, a PDCCH candidate may be taken as a PDCCH candidate single scheduling a serving cell and a PDCCH candidate simultaneously scheduling multiple serving cells, and may cross-reference-cell schedule different serving cells. For example, for a PDCCH candidate composed of CCE 0-CCE 1, it may be taken as a PDCCH candidate scheduling single cell 0 (single cell), or scheduling single cell 1 (single cell), or simultaneously scheduling cell 0 & cell 1. For a PDCCH candidate composed of CCE 6-CCE 7, it may be taken as a PDCCH candidate scheduling single cell 0 (single cell), or scheduling single cell 1 (single cell), or scheduling single cell 2 (single cell), or scheduling single cell 3 (single cell), or simultaneously scheduling cell 0 & cell 1 & cell 2 & cell 3. Furthermore, it may be deemed that a PDCCH candidate of an intersection of cell 0 (reference cell of cell 2) and cell 1 (reference cell of cell 3) is the first PDCCH candidate and non-overlapped PDCCH candidates of cell 0 (reference cell of cell 2) and cell 1 (reference cell of cell 3) are the second PDCCH candidates, and vice versa.

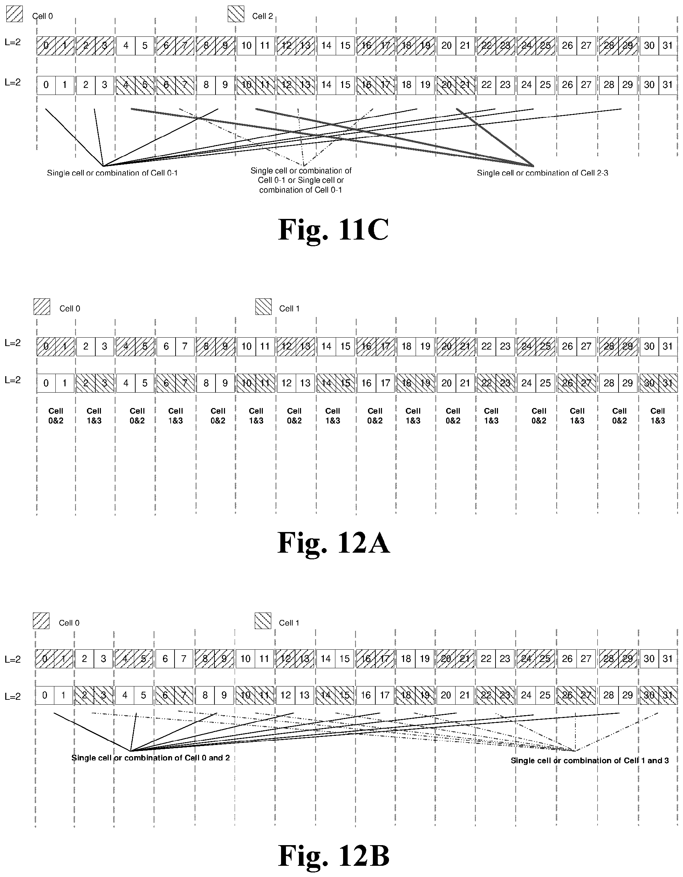

In some implementations, as shown in FIG. 11C, a PDCCH candidate may be taken as a PDCCH candidate single scheduling a serving cell and a PDCCH candidate simultaneously scheduling multiple serving cells, and may not cross-reference-cell schedule different serving cells. For example, for a PDCCH candidate that is a PDCCH candidate corresponding to CCE 6-CCE 7, it may be taken as a PDCCH candidate scheduling single cell 0 (single cell), or scheduling single cell 1 (single cell), or scheduling single cell 2 (single cell), or scheduling single cell 3 (single cell), or simultaneously scheduling cell 0 & cell 1, or simultaneously scheduling cell 2 & cell 3. In addition, parts identical to those in FIG. 11B shall not be repeated herein any further.

FIGs. 12A-12B are other schematic diagrams of the PDCCH candidate CCE of the reference cell of the embodiments of this disclosure.

For example, based on a predefined or configured mode, cell 2 is associated with cell 0, and cell 0 is a reference cell of cell 2, or it may also be referred to as reference cell 0; likewise, cell 3 is associated with cell 1, and cell 1 is a reference cell of cell 3, or it may also be referred to as reference cell 1. Parts identical to those in the above implementations shall not be repeated herein any further.

Configuration in Table 9 is taken as an example, wherein,

Table 9: Number of PDCCH candidates of each AL of each reference cell

| AL | Cell 0 (reference cell of Cell 2) | Cell 1 (reference cell of Cell 3) | Cell 2 | Cell 3 |
|----|-----------------------------------|-----------------------------------|--------|--------|
| 1  | 0 | 0 | - | - |
| 2  | 8 | 8 | - | - |
| 4  | 0 | 0 | - | - |
| 8  | 0 | 0 | - | - |
| 16 | 0 | 0 | - | - |

In some implementations, the first PDCCH candidate and/or the second PDCCH candidate is/are determined based on PDCCH candidates under different ALs of each reference cell.

Taking that AL = 2 as an example, PDCCH candidate CCEs of the cell groups are as shown in FIGs. 12A-12B.

In some implementations, as shown in FIG. 12A, a PDCCH candidate to which cell 0 corresponds may be taken as the first PDCCH candidate, and a PDCCH candidate to which cell 1 corresponds may be taken as the second PDCCH candidate. There exists no overlapped PDCCH candidates between cell 0 and cell 1, hence, simultaneous scheduling cannot be performed across cells associated with cell 0 and cell 1. For example, cell 0 & Cell 2 may be scheduled simultaneously by the first PDCCH candidate, and cell 1 & Cell 3 are simultaneously scheduled by the second PDCCH candidate. In addition, the first PDCCH candidate set and the second PDCCH candidate set do not include PDCCH candidates with identical CCEs, that is, the first PDCCH candidate set and the second PDCCH candidate set do not include PDCCH candidates with identical CCEs.

In some implementations, as shown in FIG. 12B, a PDCCH candidate to which cell 0 corresponds may be taken as the first PDCCH candidate, and a PDCCH candidate to which cell 1 corresponds may be taken as the second PDCCH candidate. Moreover, a PDCCH candidate may be taken as a PDCCH candidate single scheduling a serving cell and a PDCCH candidate simultaneously scheduling multiple serving cells. For example, for a PDCCH candidate of CCE 0-CCE 1 to which PDCCH candidates correspond, it may be taken as a PDCCH candidate scheduling single cell 0 (single cell), or scheduling single cell 2 (single cell), or simultaneously scheduling cell 0 & cell 2.

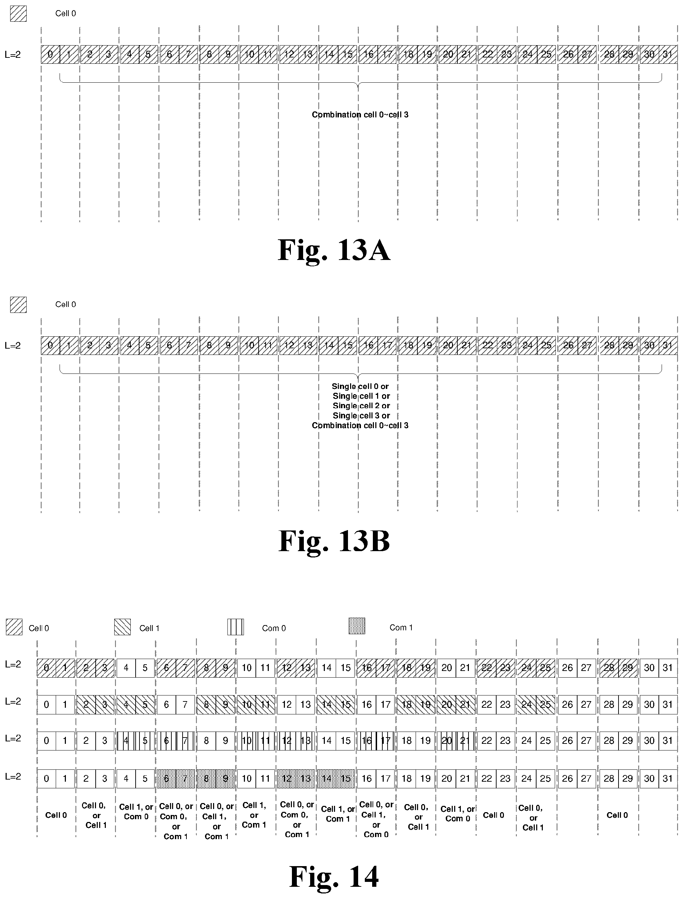

FIGs. 13A-13B are further schematic diagrams of the PDCCH candidate CCE of the reference cell of the embodiments of this disclosure.

Still taking four serving cells as an example, the number of PDCCH candidates configured for each AL of each serving cell is shown in Table 10:

Table 10: Number of PDCCH candidates of each AL of each reference cell

| AL | Cell 0 Reference cell of Cell 1/2/3 | Cell 1 | Cell 2 | Cell 3 |
|----|-------------------------------------|--------|--------|--------|
| 1 | 0 | - | - | - |
| 2 | 16 | - | - | - |
| 4 | 0 | - | - | - |
| 8 | 0 | - | - | - |
| 16 | 0 | - | - | - |

In some implementations, the first PDCCH candidate and/or the second PDCCH candidate are determined based on PDCCH candidates under different ALs of each reference cell.

Cell 0-cell 3 are associated with the same reference cell cell 0, taking that AL = 2 as an example, PDCCH candidate CCEs of reference cell cell 0 are shown in FIGs. 13A-13B.

In some implementations, as shown in FIG. 13A, PDCCH candidates in the PDCCH candidate set included in the CORESET of (corresponding to) the first search space where the first PDCCH candidate is located are respectively used to schedule at least two cells. For example, PDCCH candidates of cell 0 (associated with cell 0-cell 3) are all PDCCH candidates composed of cell 0-cell 3. Furthermore, as shown in FIG. 13A, a PDCCH candidate composed of CCE 0-CCE1 is a PDCCH candidate simultaneously scheduling cell 0-cell 4 (cell 0 & cell 1 & cell 2 & cell 3), that is, it is the first PDCCH candidate.

Optionally, in some implementations, as shown in FIG. 13B, a PDCCH candidate may be taken as a PDCCH candidate single scheduling a serving cell and a PDCCH candidate simultaneously scheduling multiple serving cells. For example, for a PDCCH candidate composed of CCE 0-CCE 1, it may be taken as a PDCCH candidate scheduling single cell 0 (single cell), or scheduling single cell 1 (single cell), or scheduling single cell 2 (single cell), or scheduling single cell 3 (single cell), or simultaneously scheduling cell 0-cell 4 (cell 0 & cell 1 & cell 2 & cell 3).

Thus, the terminal equipment is able to determine the first PDCCH candidate and/or the second PDCCH candidate of the reference cell.

In some implementations, the first PDCCH candidate is a PDCCH candidate to which a combination cell corresponds.

For example, in the case of four serving cells, cell 0 and cell 1 are predefined as scheduling single cell, cell 0 and cell 1 are combination cells, i.e. combination 1, and cell 2 and cell 3 are combination cells, i.e. combination 2. Scheduling single cell and combination cells are respectively configured with different first parameters.

FIG. 14 is a schematic diagram of a PDCCH candidate CCE of the combination cell of the embodiments of this disclosure.

Configuration in Table 11 is taken as an example, wherein,

Table 11: Number of PDCCH candidates of each AL of each combination cell

| AL | Cell 0 | Cell 1 | Combination 0 Cell 0 & Cell 1 | Combination 1 Cell 3 & Cell 3 |
|----|--------|--------|-------------------------------|-------------------------------|
| 1 | 0 | 0 | 0 | 0 |
| 2 | 10 | 8 | 6 | 4 |
| 4 | 0 | 0 | 0 | 0 |
| 8 | 0 | 0 | 0 | 0 |
| 16 | 0 | 0 | 0 | 0 |

In some implementations, the first PDCCH candidate and/or the second PDCCH candidate are determined based on PDCCH candidates under different ALs of each combination cell.

As shown in FIG. 14, for example, for AL = 2, PDCCH candidates of cell 0-cell 1, Combination 0, and Combination 1 are as shown in FIG. 14.

Taking that AL = 2 as an example, PDCCH candidate CCEs of each serving cells and each combination cell are as shown in FIG. 14, wherein a PDCCH candidate of an intersection of the PDCCH candidates to which each cell and each combination cell correspond is taken as the first PDCCH candidate. For example, a PDCCH candidate composed of CCE 2-CCE 3 is a PDCCH candidate that may schedule cell 0 & cell 1 simultaneously. Hence, the PDCCH candidate composed of CCE 2-CCE 3 may be referred to as a first PDCCH candidate. In addition, methods for determining other first PDCCH candidates shall not be enumerated herein any further.

In some implementations, a PDCCH candidate in PDCCH candidates to which each cell and each combination cell correspond having no intersection is taken as the second PDCCH candidate. For example, a PDCCH candidate composed of CCE 0-CCE 1 is a PDCCH candidate only scheduling cell 0, that is, it is the second PDCCH candidate.

In some implementations, a set composed of the first PDCCH candidates is a first PDCCH candidate set, and a set composed of the second PDCCH candidates is a second PDCCH candidate set.

In some implementations, as shown in FIG. 14, the first PDCCH candidate set and the second PDCCH candidate set do not include PDCCH candidates with identical CCEs, that is, a CCE of a PDCCH candidate of the first PDCCH candidate set is not a CCE of any PDCCH candidate of the second PDCCH candidate set.

Thus, the terminal equipment may obtain the first PDCCH candidate and/or the second PDCCH candidate, and retrieve the first DCI on the first PDCCH candidate, or retrieve the first DCI or the second DCI on the second PDCCH candidate, thereby reducing a burden of the terminal equipment in performing DCI monitoring, and lowering power consumption and complexity.

In some implementations, methods for determining PDCCH candidate CCEs of the cells, cell groups and reference cells may be determined based on the above first parameter and/or second parameter and formulae (1)-(3), which shall not be enumerated herein any further.

In some implementations, the terminal equipment monitors a third PDCCH candidate in a second search space of the first cell.

In some implementations, the second search space is used to schedule at least one cell, wherein the at least one cell and at least two cells include or do not include the same cell, and the at least one cell does not include a cell in the at least two cells.

In some implementations, the second search space is only used to schedule one cell, wherein the cell is the first cell or the second cell.

In some implementations, the first search space or the second search space is a UE-specific search space (USS) or a common search space (CSS).

In some embodiments, reference may be made to the method for determining a PDCCH candidate set included in the CORESET of the first search space or existing techniques for a method for determining a PDCCH candidate set included in a CORESET of (corresponding to) the second search space, and the embodiments of this disclosure are not limited thereto. For example, when the second search space is only used for scheduling one cell, reference may be made to existing techniques, and when the second search space is only used for scheduling at least one cell, reference may be made to the method for determining a PDCCH candidate set included in the CORESET of the first search space.

It should be noted that FIGs. 6-14 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIGs. 6-14.

It can be seen from the above embodiments that the terminal equipment is able to determine the first PDCCH candidate, and receives DCI scheduling at least two cells based on the first PDCCH candidate, so as to support scheduling multiple serving cells by one DCI, thereby alleviating a burden of the terminal equipment in performing DCI monitoring, and lowering power consumption and complexity. Moreover, by further supporting scheduling PDSCHs and/or PUSCHs on multiple serving cells at a time on the basis of scheduling a cell by the DCI at a time, flexibility of scheduling may further be increased, and efficiency of data transmission may be improved.

Embodiments of a second aspect

The embodiments of this disclosure provide a data transmission and reception method, which shall be describe from a network device side, with parts repeated with those in the embodiments of the first aspect being not going to be described herein any further.

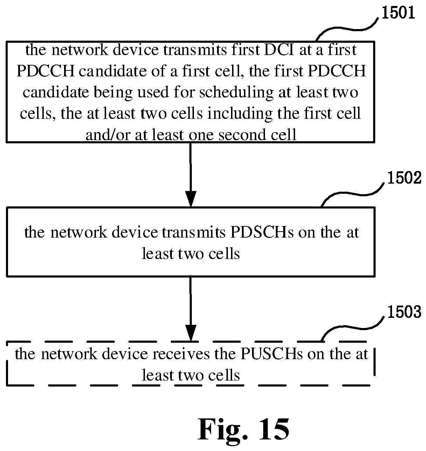

FIG. 15 is a schematic diagram of a data transmission and reception method of the embodiments of this disclosure. As shown in FIG. 15, the method includes:

　　1501: the network device transmits first DCI at a first PDCCH candidate of a first cell, the first PDCCH candidate being used for scheduling at least two cells, the at least two cells including the first cell and/or at least one second cell;
　　1502: the network device transmits PDSCHs on the at least two cells; and
　　1503: the network device receives the PUSCHs on the at least two cells.

In some embodiments, the first cell is a scheduling cell, and the second cell is a scheduled cell.

In some embodiments, the first cell is a primary cell, and the at least one second cell includes a secondary cell; or, the first cell is a secondary cell, and the at least one second cell includes a primary cell and/or a secondary cell.

In some embodiments, the network device transmits cell configuration information of the first cell and/or the at least one second cell, wherein the cell configuration information includes or does not include first indication information for configuring a search space, and/or includes or does not include second indication information for configuring PDCCH candidates, and/or includes or does not include third indication information for configuring a search space identifier.

In some embodiments, cell configuration information of a second cell in the at least one second cell does not include the first indication information, or does not include the second indication information, or includes the third indication information and/or the second indication information.

In some embodiments, in a case where the cell configuration information of the first cell and/or at least one second cell includes the second indication information, PDCCH candidates configured for each cell are identical.

In some embodiments, the first PDCCH candidate is used to transmit first DCI, first DCI being used to schedule two or more cells simultaneously.

In some embodiments, PDCCH candidates in a PDCCH candidate set included in a CORESET of (corresponding to) the first search space where the first PDCCH candidate is located are respectively used to schedule the at least two cells.

In some embodiments, the PDCCH candidate set included in the CORESET of (corresponding to) the first search space where the first PDCCH candidate is located includes a first PDCCH candidate set and a second PDCCH candidate set, PDCCH candidates in the first PDCCH candidate set being used for scheduling the at least two cells, PDCCH candidates in the second PDCCH candidate set being used for scheduling at least one cell, and the at least one cell and the at least two cells including or not including the same cell.

In some implementations, the second PDCCH candidate is used to transmit the first DCI or the second DCI, and the second DCI is only used for scheduling the one cell.

It should be noted that FIG. 15 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 15.

It can be seen from the above embodiments that the terminal equipment is able to determine the first PDCCH candidate, and receives DCI scheduling at least two cells based on the first PDCCH candidate, so as to support scheduling multiple serving cells by one DCI, thereby alleviating a burden of the terminal equipment in performing DCI monitoring, and lowering power consumption and complexity. Moreover, by further supporting scheduling PDSCHs and/or PUSCHs on multiple serving cells at a time on the basis of scheduling a cell by the DCI at a time, flexibility of scheduling may further be increased, and efficiency of data transmission may be improved.

Embodiments of a third aspect

The embodiments of this disclosure provide a data reception and transmission apparatus. The apparatus may be, for example, a terminal equipment, or one or some components or assemblies configured in the terminal equipment. Contents in the embodiments identical to those in the embodiments of the first aspect shall not be described herein any further.

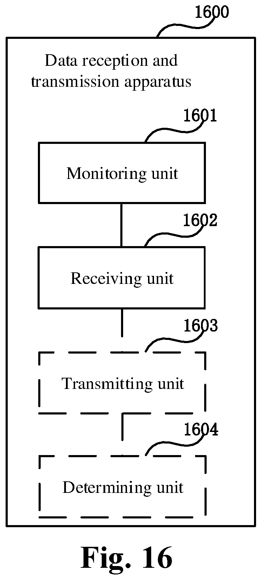

FIG. 16 is a schematic diagram of a data reception and transmission apparatus 1600 of the embodiments of this disclosure. As shown in FIG. 16, the apparatus includes:

a monitoring unit 1601 configured to monitor a first PDCCH candidate for scheduling at least two cells in a first cell, the at least two cells including the first cell and/or at least one second cell;
a receiving unit 1602 configured to receive PDSCHs on the at least two cells; and/or,
a transmitting unit 1603 configured to transmit PUSCHs on the at least two cells.

In some embodiments, the first cell is a scheduling cell, and the second cell is a scheduled cell.

In some embodiments, the first cell is a primary cell, and the at least one second cell includes a secondary cell; or, the first cell is a secondary cell, and the at least one second cell includes a primary cell and/or a secondary cell.

In some embodiments, the data reception and transmission apparatus 1600 further includes: a determining unit 1604 configured to determine a CCE of the first PDCCH candidate.

In some embodiments, the receiving unit 1602 further receives cell configuration information of the first cell and/or the at least one second cell, the cell configuration information including or not including first indication information for configuring a search space, and/or the cell configuration information including or not including second indication information for configuring PDCCH candidates, and/or, the cell configuration information including or not including third indication information for configuring a search space identifier.

In some embodiments, cell configuration information of a second cell in the at least one second cell does not include the first indication information, or does not include the second indication information, or includes the third indication information and/or the second indication information.

In some embodiments, when the cell configuration information of the first cell and/or the at least one second cell respectively includes the second indication information, PDCCH candidates configured for each cell are identical.

In some embodiments, the first PDCCH candidate is used for transmitting first DCI, the first DCI being used for scheduling two or more cells simultaneously.

In some embodiments, the determining unit 1604 further determines a PDCCH candidate set included in a CORESET of (corresponding to) a first search space where the first PDCCH candidate is located.

In some embodiments, every PDCCH candidate in the PDCCH candidate set included in the CORESET of (corresponding to) the first search space where the first PDCCH candidate is located is respectively used for scheduling the at least two cells.

In some embodiments, the PDCCH candidate set included in the CORESET of (corresponding to) the first search space where the first PDCCH candidate is located includes a first PDCCH candidate set and a second PDCCH candidate set, PDCCH candidates in the first PDCCH candidate set being used for scheduling the at least two cells, PDCCH candidates in the second PDCCH candidate set being used for scheduling at least one cell, and the at least one cell and the at least two cells including or not including the same cell.

In some embodiments, the first PDCCH candidate set and the second PDCCH candidate set include or do not include PDCCH candidates with identical CCEs.

In some embodiments, a CCE of a PDCCH candidate of the first PDCCH candidate set is not a CCE of any PDCCH candidate of the second PDCCH candidate set.

In some embodiments, the monitoring unit 1601 monitors a third PDCCH candidate in a second search space of the first cell.

In some embodiments, the second search space is used for scheduling at least one cell, the at least one cell and the at least two cells including or not including the same cell, and the at least one cell not including a cell on the at least two cells.

In some embodiments, the second search space is only used for scheduling one cell, the one cell being the first cell or the second cell.

In some embodiments, the second PDCCH candidate is used for transmitting first DCI or second DCI, the second DCI being used only for scheduling the one cell.

In some embodiments, the first search space or the second search space is a terminal equipment-specific search space or a common search space.

In some embodiments, the first search space is used for scheduling two or more cells, the two or more cells including the at least two cells of the first PDCCH candidate used for scheduling.

Reference may be made to the embodiments of the first aspect for implementation of the data scheduling apparatus in FIG. 16, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data reception and transmission apparatus 1600 may further include other components or modules, and reference may be made to related techniques for particulars of these components or modules.

Furthermore, for the sake of simplicity, connection relationships between the components or modules or signal profiles thereof are only illustrated in FIG. 16. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the terminal equipment is able to determine the first PDCCH candidate, and receives DCI scheduling at least two cells based on the first PDCCH candidate, so as to support scheduling multiple serving cells by one DCI, thereby alleviating a burden of the terminal equipment in performing DCI monitoring, and lowering power consumption and complexity. Moreover, by further supporting scheduling PDSCHs and/or PUSCHs on multiple serving cells at a time on the basis of scheduling a cell by the DCI at a time, flexibility of scheduling may further be increased, and efficiency of data transmission may be improved.

Embodiments of a fourth aspect

The embodiments of this disclosure provide a data transmission and reception apparatus. The apparatus may be, for example, a network device, or one or some components or assemblies configured in the network device. Contents in the embodiments identical to those in the embodiments of the fourth aspect shall not be described herein any further.

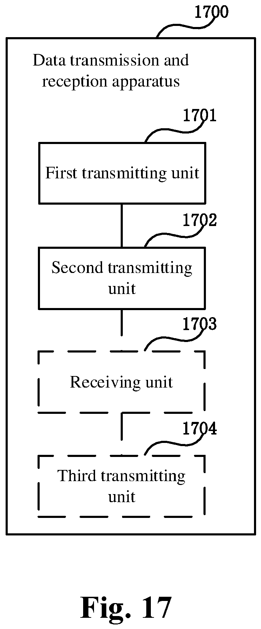

FIG. 17 is a schematic diagram of a data transmission and reception apparatus 1700 of the embodiments of this disclosure. As shown in FIG. 17, the apparatus includes:

a first transmitting unit 1701 configured to transmit first DCI at a first PDCCH candidate of a first cell, the first PDCCH candidate being used for scheduling at least two cells, the at least two cells including the first cell and/or at least one second cell;

a second transmitting unit 1702 configured to transmit PDSCHs on the at least two cells; and/or,

a receiving unit 1703 configured to receive the PUSCHs on the at least two cells.

In some embodiments, the first PDCCH candidate is used for transmitting first DCI, the first DCI being used for scheduling two or more cells simultaneously.

In some embodiments, the first cell is a scheduling cell, and the second cell is a scheduled cell.

In some embodiments, the first cell is a primary cell, and the at least one second cell includes a secondary cell; or, the first cell is a secondary cell, and the at least one second cell includes a primary cell and/or a secondary cell.

In some embodiments, the data transmission and reception apparatus 1700 further includes a third transmitting unit 1704 configured to transmit cell configuration information of the first cell and/or the at least one second cell, the cell configuration information including or not including first indication information for configuring a search space, and/or the cell configuration information including or not including second indication information for configuring PDCCH candidates, and/or, the cell configuration information including or not including third indication information for configuring a search space identifier.

In some embodiments, cell configuration information of a second cell in the at least one second cell does not include the first indication information, or does not include the second indication information, or includes the third indication information and/or the second indication information.

In some embodiments, when the cell configuration information of the first cell and/or the at least one second cell respectively includes the second indication information, PDCCH candidates configured for each cell are identical.

In some embodiments, the first PDCCH candidate is used for transmitting first DCI, the first DCI being used for scheduling two or more cells simultaneously.

In some embodiments, every PDCCH candidate in a PDCCH candidate set included in a CORESET of (corresponding to) a first search space where the first PDCCH candidate is located is respectively used for scheduling the at least two cells.

In some embodiments, the PDCCH candidate set included in the CORESET of (corresponding to) the first search space where the first PDCCH candidate is located includes a first PDCCH candidate set and a second PDCCH candidate set, PDCCH candidates in the first PDCCH candidate set being used for scheduling the at least two cells, PDCCH candidates in the second PDCCH candidate set being used for scheduling at least one cell, and the at least one cell and the at least two cells including or not including the same cell.

In some embodiments, the second PDCCH candidate is used for transmitting first DCI or second DCI, the second DCI being used only for scheduling the one cell.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data transmission and reception apparatus 1700 may further include other components or modules, and reference may be made to related techniques for particulars of these components or modules.

Furthermore, for the sake of simplicity, connection relationships between the components or modules or signal profiles thereof are only illustrated in FIG. 17. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the terminal equipment is able to determine the first PDCCH candidate, and receives DCI scheduling at least two cells based on the first PDCCH candidate, so as to support scheduling multiple serving cells by one DCI, thereby alleviating a burden of the terminal equipment in performing DCI monitoring, and lowering power consumption and complexity. Moreover, by further supporting scheduling PDSCHs and/or PUSCHs on multiple serving cells at a time on the basis of scheduling a cell by the DCI at a time, flexibility of scheduling may further be increased, and efficiency of data transmission may be improved.

Embodiments of a fifth aspect

The embodiments of this disclosure provide a communication system, and reference may be made to FIG. 1, with contents identical to those in the embodiments of the first to the fourth aspects being not going to be described herein any further.

In some embodiments, the communication system 100 may at least include: a terminal equipment 102 and/or a network device 101.

In some embodiments, reference may be made to the terminal equipment 1900 below for implementation of the terminal equipment 102, and reference may be made to the network device 1800 for implementation of the network device 101.

The embodiments of this disclosure further provide a network device, which may be, for example, a base station. However, this disclosure is not limited thereto, and it may also be another network device.

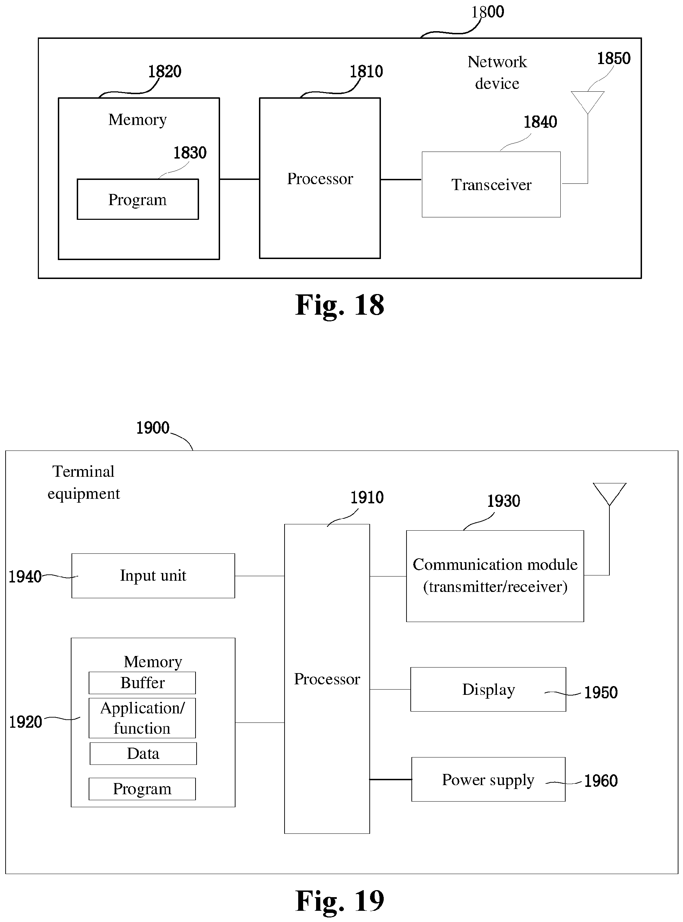

FIG. 18 is a schematic diagram of a structure of a network device of the embodiments of this disclosure. As shown in FIG. 18, a network device 1800 may include a processor 1810 (such as a central processing unit (CPU)) and a memory 1820, the memory 1820 being coupled to the processor 1810. The memory 1820 may store various data, and furthermore, it may store a program 1830 for information processing, and execute the program 1830 under control of the processor 1810.

For example, the processor 1810 may be configured to execute a program to carry out the data transmission and reception method described in the embodiments of the second aspect.

Furthermore, as shown in FIG. 18, the network device 1800 may include a transceiver 1840, and an antenna 1850, etc. Functions of the above components are similar to those in the related art, and shall not be described herein any further. It should be noted that the network device 1800 does not necessarily include all the parts shown in FIG. 18, and furthermore, the network device 1800 may include parts not shown in FIG. 18, and the related art may be referred to.

The embodiments of this disclosure further provide a terminal equipment; however, this disclosure is not limited thereto, and it may also be another equipment.

FIG. 19 is a schematic diagram of a terminal equipment of the embodiments of this disclosure. As shown in FIG. 19, a terminal equipment 1900 may include a processor 1910 and a memory 1920, the memory 1920 storing data and a program and being coupled to the processor 1910. It should be noted that this figure is illustrative only, and other types of structures may also be used, so as to supplement or replace this structure and achieve a telecommunications function or other functions.

For example, the processor 1910 may be configured to execute a program to carry out the data reception and transmission method as described in the embodiments of the first aspect.

As shown in FIG. 19, the terminal equipment 1900 may further include a communication module 1930, an input unit 1940, a display 1950, and a power supply 1960, wherein functions of the above components are similar to those in the related art, which shall not be described herein any further. It should be noted that the terminal equipment 1900 does not necessarily include all the parts shown in FIG. 19, and the above components are not necessary. Furthermore, the terminal equipment 1900 may include parts not shown in FIG. 19, and the related art may be referred to.

Embodiments of this disclosure provide a computer readable program, which, when executed in a terminal equipment, causes the terminal equipment to carry out the data reception and transmission method as described in the embodiments of the first aspect.

Embodiments of this disclosure provide a computer storage medium, including a computer readable program, which causes a terminal equipment to carry out the data reception and transmission method as described in the embodiments of the first aspect.

Embodiments of this disclosure provide a computer readable program, which, when executed in a network device, causes the network device to carry out the data transmission and reception method as described in the embodiments of the second aspect.

Embodiments of this disclosure provide a computer storage medium, including a computer readable program, which causes a network device to carry out the data transmission and reception method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.

1. A data reception and transmission method, applicable to a terminal equipment, characterized in that the method includes:

monitoring a first PDCCH candidate for scheduling at least two cells by the terminal equipment in a first cell, the at least two cells including the first cell and/or at least one second cell; and
receiving PDSCHs and/or transmitting PUSCHs by the terminal equipment on the at least two cells.

2. The method according to supplement 1, wherein the first cell is a scheduling cell, and the second cell is a scheduled cell.
3. The method according to supplements 1-2, wherein the first cell is a primary cell, and the at least one second cell includes a secondary cell; or, the first cell is a secondary cell, and the at least one second cell includes a primary cell and/or a secondary cell.
4. The method according to supplements 1-3, wherein the method further includes:
determining a CCE of the first PDCCH candidate by the terminal equipment.
5. The method according to supplements 1-4, wherein the method further includes:
receiving cell configuration information of the first cell and/or the at least one second cell by the terminal equipment, the cell configuration information including or not including first indication information for configuring a search space, and/or the cell configuration information including or not including second indication information for configuring PDCCH candidates, and/or, the cell configuration information including or not including third indication information for configuring a search space identifier.
6. The method according to supplement 5, wherein the method further includes:
cell configuration information of a second cell in the at least one second cell does not include the first indication information, or does not include the second indication information, or includes the third indication information and/or the second indication information.
7. The method according to supplement 5, wherein the method further includes:
when the cell configuration information of the first cell and/or the at least one second cell respectively includes the second indication information, PDCCH candidates configured for cells are identical.
8. The method according to supplements 1-7, wherein the method further includes:
the first PDCCH candidate is used for transmitting first DCI, the first DCI being used for scheduling two or more cells simultaneously.
9. The method according to any one of supplements 1-8, wherein the method further includes:
determining a PDCCH candidate set included in a CORESET of (corresponding to) a first search space where the first PDCCH candidate is located by the terminal equipment.
10. The method according to any one of supplements 1-9, wherein every PDCCH candidate in the PDCCH candidate set included in the CORESET of (corresponding to) the first search space where the first PDCCH candidate is located is respectively used for scheduling the at least two cells.
11. The method according to any one of supplements 1-9, wherein the PDCCH candidate set included in the CORESET of (corresponding to) the first search space where the first PDCCH candidate is located includes a first PDCCH candidate set and a second PDCCH candidate set, PDCCH candidates in the first PDCCH candidate set being used for scheduling the at least two cells, PDCCH candidates in the second PDCCH candidate set being used for scheduling at least one cell, and the at least one cell and the at least two cells including or not including the same cell.

12. The method according to supplement 11, wherein the first PDCCH candidate set and the second PDCCH candidate set include or do not include PDCCH candidates with identical CCEs.

13. The method according to supplement 12, wherein a CCE of a PDCCH candidate of the first PDCCH candidate set is not a CCE of any PDCCH candidate of the second PDCCH candidate set.

14. The method according to any one of supplements 1-13, wherein the method further includes:

monitoring a third PDCCH candidate in a second search space of the first cell,
and the second search space is used for scheduling at least one cell, the at least one cell and the at least two cells including or not including the same cell, and the at least one cell not including a cell on the at least two cells.

15. The method according to supplement 14, wherein the second search space is only used for scheduling one cell, the one cell being the first cell or the second cell.

16. The method according to any one of supplements 1-15, wherein the second PDCCH candidate is used for transmitting first DCI or second DCI, the second DCI being used only for scheduling the one cell.

17. The method according to any one of supplements 9-16, wherein the first search space or the second search space is a terminal equipment-specific search space or a common search space.

18. The method according to any one of supplements 9-17, wherein the first search space is used for scheduling two or more cells, the two or more cells including the at least two cells of the first PDCCH candidate used for scheduling.

19. The method according to supplement 9, wherein the determining a PDCCH candidate set included in a CORESET of (corresponding to) a first search space includes:
determining the PDCCH candidate set according to a first parameter and/or a second parameter.

20. The method according to supplement 9, wherein the CCEs of the PDCCH candidates in the PDCCH candidate set included in the CORESET of (corresponding to) the first search space are related to the first parameter and/or the second parameter.

21. The method according to supplements 19-20, wherein different cells correspond to different first parameters.

22. The method according to supplements 1-21, wherein the first PDCCH candidate is a PDCCH candidate in an intersection of PDCCH candidates to which the at least two cells respectively correspond.

23. The method according to supplements 1-21, wherein the first PDCCH candidate is a PDCCH candidate to which a cell on the at least two cells correspond.

24. The method according to any one of supplements 19-23, wherein the cell is a third cell, and the reference cell is predefined and/or preconfigured with a corresponding first parameter.

25. The method according to supplement 23, wherein the one cell is a third cell.

26. The method according to supplement 19, wherein different cells correspond to identical first parameters.

27. The method according to supplement 26, wherein the different cells are cells in the same cell group.

28. The method according to supplement 27, wherein the first parameter is an index value of the cell group.

29. The method according to supplement 19, wherein the first parameter corresponds to the third cell, and the second parameter corresponds to at least one cell with which the third cell is associated.

30. The method according to supplement 19, wherein the first parameter corresponds to a cell group index, and the second parameter corresponds to at least one cell within the cell group.

31. The method according to supplement 11, wherein the CCEs of the PDCCH candidates in the PDCCH candidate set included in the CORESET of (corresponding to) the first search space are related to the first parameter, and the CCEs of the PDCCH candidates in the PDCCH candidate set included in the CORESET of (corresponding to) the second search space are related to the second parameter.

32. The method according to any one of supplements 19-31, wherein a value/values of the first parameter and/or the second parameter is/are determined according to a predefined or preconfigured value indicated by a carrier or a value of a relevant parameter indicating the scheduled cell, or is/are defined or configured.

33. A data transmission and reception method, applicable to a network device, characterized in that the method includes:

transmitting first DCI by the network device at a first PDCCH candidate of a first cell, the first PDCCH candidate being used for scheduling at least two cells, the at least two cells including the first cell and/or at least one second cell; and
transmitting/receiving PDSCHs by the network device on the at least two cells.

34. The method according to supplement 33, wherein the first cell is a scheduling cell, and the second cell is a scheduled cell.

35. The method according to supplement 33, wherein the first cell is a primary cell, and the at least one second cell includes a secondary cell; or, the first cell is a secondary cell, and the at least one second cell includes a primary cell and/or a secondary cell.

36. The method according to supplements 33-35, wherein the method further includes:

transmitting cell configuration information of the first cell and/or the at least one second cell by the network device, wherein the cell configuration information includes or does not include first indication information for configuring a search space, and/or includes or does not include second indication information for configuring PDCCH candidates, and/or includes or does not include third indication information for configuring a search space identifier.

37. The method according to supplement 36, wherein the method further includes:

cell configuration information of a second cell in the at least one second cell does not include the first indication information, or does not include the second indication information, or includes the third indication information and/or the second indication information.

38. The method according to supplement 37, wherein the method further includes:

in a case where the cell configuration information of the first cell and/or at least one second cell includes the second indication information, PDCCH candidates configured for the cells are identical.

39. The method according to supplements 33-38, wherein the method further includes:

the first PDCCH candidate is used to transmit first DCI, first DCI being used to schedule two or more cells simultaneously.

40. The method according to any one of supplements 33-39, wherein PDCCH candidates in a PDCCH candidate set included in a CORESET of (corresponding to) the first search space where the first PDCCH candidate is located are respectively used to schedule the at least two cells.

41. The method according to any one of supplements 33-39, wherein the PDCCH candidate set included in the CORESET of (corresponding to) the first search space where the first PDCCH candidate is located includes a first PDCCH candidate set and a second PDCCH candidate set, PDCCH candidates in the first PDCCH candidate set being used for scheduling the at least two cells, PDCCH candidates in the second PDCCH candidate set being used for scheduling at least one cell, and the at least one cell and the at least two cells including or not including the same cell.

42. The method according to supplement 41, wherein the second PDCCH candidate is used to transmit the first DCI or the second DCI, and the second DCI is only used for scheduling the one cell.

43. A terminal equipment, including a memory and a processor, the memory storing a computer program, and the processor being configured to execute the computer program to carry out the data reception and transmission method as described in any one of supplements 1-32.

44. A network device, including a memory and a processor, the memory storing a computer program, and the processor being configured to execute the computer program to carry out the data transmission and reception method as described in any one of supplements 33-43.

45. A communication system, including:

the network device as described in supplement 43, and/or,
the terminal equipment as described in supplement 44.

## Claims

1. A data reception and transmission apparatus, applicable to a terminal equipment, **characterized in that** the apparatus comprises:

a monitoring unit configured to monitor a first PDCCH candidate for scheduling at least two cells in a first cell, the at least two cells including the first cell and/or at least one second cell;
a receiving unit configured to receive PDSCHs on the at least two cells; and/or,
a transmitting unit configured to transmit PUSCHs on the at least two cells.

2. The apparatus according to claim 1, wherein the first cell is a scheduling cell, and the second cell is a scheduled cell.

3. The apparatus according to claim 1, wherein the first cell is a primary cell, and the at least one second cell comprises a secondary cell; or, the first cell is a secondary cell, and the at least one second cell includes a primary cell and/or a secondary cell.

4. The apparatus according to claim 1, wherein the apparatus further comprises:
a determining unit configured to determine a CCE of the first PDCCH candidate.

5. The apparatus according to claim 1, wherein,
the receiving unit further receives cell configuration information of the first cell and/or the at least one second cell, the cell configuration information including or not including first indication information for configuring a search space, and/or the cell configuration information including or not including second indication information for configuring PDCCH candidates, and/or, the cell configuration information including or not including third indication information for configuring a search space identifier.

6. The apparatus according to claim 5, wherein,
cell configuration information of a second cell in the at least one second cell does not include the first indication information, or does not include the second indication information, or includes the third indication information and/or the second indication information.

7. The apparatus according to claim 5, wherein,
when the cell configuration information of the first cell and/or the at least one second cell respectively includes the second indication information, PDCCH candidates configured for cells are identical.

8. The apparatus according to claim 1, wherein,
the first PDCCH candidate is used for transmitting first DCI, the first DCI being used for scheduling two or more cells simultaneously.

9. The apparatus according to claim 1, wherein,
the determining unit further determines a PDCCH candidate set included in a CORESET of (corresponding to) a first search space where the first PDCCH candidate is located.

10. The apparatus according to claim 1, wherein every PDCCH candidate in the PDCCH candidate set included in the CORESET of (corresponding to) the first search space where the first PDCCH candidate is located is respectively used for scheduling the at least two cells.

11. The apparatus according to claim 1, wherein the PDCCH candidate set included in the CORESET of (corresponding to) the first search space where the first PDCCH candidate is located includes a first PDCCH candidate set and a second PDCCH candidate set, PDCCH candidates in the first PDCCH candidate set being used for scheduling the at least two cells, PDCCH candidates in the second PDCCH candidate set being used for scheduling at least one cell, and the at least one cell and the at least two cells including or not including the same cell.

12. The apparatus according to claim 11, wherein the first PDCCH candidate set and the second PDCCH candidate set include or do not include PDCCH candidates with identical CCEs.

13. The apparatus according to claim 12, wherein a CCE of a PDCCH candidate of the first PDCCH candidate set is not a CCE of any PDCCH candidate of the second PDCCH candidate set.

14. The apparatus according to claim 1, wherein,

the monitoring unit monitors a third PDCCH candidate in a second search space of the first cell;
and the second search space is used for scheduling at least one cell, the at least one cell and the at least two cells including or not including the same cell, and the at least one cell not including a cell on the at least two cells.

15. The apparatus according to claim 14, wherein,
the second search space is only used for scheduling one cell, the one cell being the first cell or the second cell.

16. The apparatus according to claim 15, wherein the second PDCCH candidate is used for transmitting first DCI or second DCI, the second DCI being used only for scheduling the one cell.

17. The apparatus according to claim 14, wherein the first search space or the second search space is a terminal equipment-specific search space or a common search space.

18. The apparatus according to claim 9, wherein the first search space is used for scheduling two or more cells, the two or more cells including the at least two cells of the first PDCCH candidate used for scheduling.

19. A data transmission and reception apparatus, applicable to a network device, **characterized in that** the apparatus comprises:

   a first transmitting unit configured to transmit first DCI at a first PDCCH candidate of a first cell, the first PDCCH candidate being used for scheduling at least two cells, the at least two cells including the first cell and/or at least one second cell;
   a second transmitting unit configured to transmit PDSCHs on the at least two cells; and/or,
   a receiving unit configured to receive the PUSCHs on the at least two cells.

20. The apparatus according to claim 19, wherein,
   the first PDCCH candidate is used for transmitting first DCI, the first DCI being used for scheduling two or more cells simultaneously.

<u>100</u>

101

103

102

# Fig. 1

BWP

$N_{RB}^{CORESET} = 6$

$N_{symbol}^{CORESET} = 2$

10  11

8  9

One REG

6  7

4  5

2  3

0  1

DM-RS

PDCCH

# Fig. 2A

28

**Fig. 2B**

**Fig. 3**

**Fig. 4**

**Fig. 5**

**Fig. 6A**

Fig. 6B

Fig. 7A

Fig. 7B

Fig. 8A

Fig. 8B

Fig. 8C

EP 4 518 504 A1

Fig. 9A

Fig. 9B

Fig. 10A

**Fig. 10B**

**Fig. 11A**

**Fig. 11B**

Cell 0    Cell 2

L=2 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

L=2 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

Single cell or combination of Cell 0-1      Single cell or combination of Cell 0-1 or Single cell or combination of Cell 0-1      Single cell or combination of Cell 2-3

## Fig. 11C

Cell 0    Cell 1

L=2 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

L=2 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

| Cell 0&2 | Cell 1&3 | Cell 0&2 | Cell 1&3 | Cell 0&2 | Cell 1&3 | Cell 0&2 | Cell 1&3 | Cell 0&2 | Cell 1&3 | Cell 0&2 | Cell 1&3 | Cell 0&2 | Cell 1&3 | Cell 0&2 | Cell 1&3 |

## Fig. 12A

Cell 0    Cell 1

L=2 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

L=2 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

Single cell or combination of Cell 0 and 2      Single cell or combination of Cell 1 and 3

## Fig. 12B

Cell 0

L=2  | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

Combination cell 0~cell 3

## Fig. 13A

Cell 0

L=2  | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

Single cell 0 or
Single cell 1 or
Single cell 2 or
Single cell 3 or
Combination cell 0~cell 3

## Fig. 13B

Cell 0          Cell 1          Com 0          Com 1

L=2 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

L=2 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

L=2 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

L=2 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

Cell 0 | Cell 0, or Cell 1 | Cell 1, or Com 0 | Cell 0, or Com 0, or Com 1 | Cell 0, or Cell 1, or Com 1 | Cell 1, or Com 1 | Cell 0, or Com 0, or Com 1 | Cell 1, or Com 1 | Cell 0, or Cell 1, or Com 0 | Cell 0, or Com 0 | Cell 1, or Com 0 | Cell 0 | Cell 0, or Cell 1 | Cell 0

## Fig. 14

1501

the network device transmits first DCI at a first
PDCCH candidate of a first cell, the first PDCCH
candidate being used for scheduling at least two
cells, the at least two cells including the first cell
and/or at least one second cell

1502

the network device transmits PDSCHs on the at
least two cells

1503

the network device receives the PUSCHs on the at
least two cells

# Fig. 15

1600

Data reception and
transmission apparatus

1601

Monitoring unit

1602

Receiving unit

1603

Transmitting unit

1604

Determining unit

## Fig. 16

1700

Data transmission and
reception apparatus

1701

First transmitting unit

1702

Second transmitting
unit

1703

Receiving unit

1704

Third transmitting
unit

# Fig. 17

1800

1820　　　　　　1810　　　Network
　　　　　　　　　　　　　　　　device　　　　　　1850

Memory
　　　　　1830　　　Processor　　　　　1840

Program　　　　　　　　　　　　Transceiver

**Fig. 18**

1900

Terminal
equipment
　　　　　　　　　　　　1910　　　　1930

1940　　Input unit　　　　　　　　Communication module
　　　　　　　　　　　　　　　　(transmitter/receiver)

　　　　　Memory　　　Processor
　　　　　Buffer
1920　　Application/　　　　　　Display　　　1950
　　　　function
　　　　　Data
　　　　　Program　　　　　　　Power supply　　1960

**Fig. 19**

<div align="center">

**INTERNATIONAL SEARCH REPORT**

</div>

| International application No. |
| --- |
| **PCT/CN2022/090100** |

**A.    CLASSIFICATION OF SUBJECT MATTER**

H04W 72/12(2009.01)i

According to International Patent Classification (IPC) or to both national classification and IPC

**B.    FIELDS SEARCHED**

Minimum documentation searched (classification system followed by classification symbols)

H04W; H04Q; H04B

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 两, 多, 小区, 监听, 监视, 监控, 监测, 检测, 候选, PDCCH, PDSCH, PUSCH, candidate, two, multi+, cell, monitor, detect

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2021151237 A1 (QUALCOMM INC.) 05 August 2021 (2021-08-05) claims 1-34, and description, paragraphs [0048]-[0126] | 1-20 |
| X | CN 113473634 A (INTEL CORP.) 01 October 2021 (2021-10-01) claims 1-25, and description, paragraphs [0028]-[0281] | 1-20 |
| X | US 2021321400 A1 (QUALCOMM INC.) 14 October 2021 (2021-10-14) claims 1-30, and description, paragraphs [0046]-[0136] | 1-20 |
| X | US 2022086894 A1 (SAMSUNG ELECTRONICS CO., LTD.) 17 March 2022 (2022-03-17) claims 1-20, and description, paragraphs [0080]-[0217] | 1-20 |
| X | CATT. "Discussion on cross-carrier scheduling from Scell to Pcell" *3GPP TSG RAN WG1 #104-e R1-2100358*, 19 January 2021 (2021-01-19), sections 1-2 | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 November 2022** | **28 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/090100**

| Patent document cited in search report | | | Publication date (day/month/year) | Patent family member(s) | | | Publication date (day/month/year) |
|---|---|---|---|---|---|---|---|
| WO | 2021151237 | A1 | 05 August 2021 | None | | | |
| CN | 113473634 | A | 01 October 2021 | None | | | |
| US | 2021321400 | A1 | 14 October 2021 | WO | 2021207416 | A1 | 14 October 2021 |
| US | 2022086894 | A1 | 17 March 2022 | WO | 2022055333 | A1 | 17 March 2022 |

Form PCT/ISA/210 (patent family annex) (January 2015)